**Europäisches Patentamt**

**European Patent Office**

**Office européen des brevets**

(11) Veröffentlichungsnummer: **0 032 392**

**A2**

(12) **EUROPÄISCHE PATENTANMELDUNG**

(21) Anmeldenummer: **81100147.8**

(22) Anmeldetag: **10.01.81**

(51) Int. Cl.³: **F 16 L 3/16**
**B 65 D 90/12**

(30) Priorität: **12.01.80 DE 3001028**
**23.07.80 DE 3027874**

(43) Veröffentlichungstag der Anmeldung:
**22.07.81 Patentblatt 81/29**

(84) Benannte Vertragsstaaten:
**AT BE CH DE FR GB IT LI NL SE**

(71) Anmelder: **Görgens, Erich**
**Wittelsbachstrasse 51**
**D-4000 Düsseldorf(DE)**

(72) Erfinder: **Görgens, Erich**
**Wittelsbachstrasse 51**
**D-4000 Düsseldorf(DE)**

(74) Vertreter: **Patentanwaltsbüro Cohausz & Florack**
**Postfach 14 01 47**
**D-4000 Düsseldorf 1(DE)**

(54) **Stützvorrichtung für Teile an Bauwerken oder Anlagen.**

(57) Die Erfindung betrifft eine Stützvorrichtung für Teile, wie Rohre, Behälter oder Wände an Bauwerken oder Anlagen, für die ein statischer oder dynamischer Lastfallnachweis erforderlich ist. Die Vorrichtung weist Lastübertragungsteile, insbesondere Stäbe auf, die mit ihren an beiden Enden angeordneten Gelenken befestigt sind. Das zu stützende Teil 3, 23, 23a, 23b ist von einem feststehenden Rahmen 4 oder Rahmenteil 4a umgeben, an dem die Lastübertragungsteile 5, 21, 21a angelenkt sind, wobei das zu stützende Teil im Rahmen oder Rahmenteil in mindestens einer Bewegungs-oder Drehrichtung X, Y, Z, D freibeweglich gelagert ist. Zusätzlich kann zu den am Bauwerk oder der Anlage und am zu stützenden Teil befestigten Gelenkstellen mindestens eine weitere Gelenkstelle 50-54, 61 zwischen den Lastübertragungsteilen angeordnet sein, über die das zu stützende Teil gehalten ist und an der nur Lastübertragungsteile angelenkt sind.

Fig. 1

- 1 -

Stützvorrichtung für Teile an Bauwerken oder Anlagen

Die Erfindung betrifft eine Stützvorrichtung für Teile,
wie Rohre, Behälter, Wände, Decken, Bühnen, Träger,
Maschinen, an Bauwerken oder Anlagen, insbesondere
für die ein statischer und/oder dynamischer Lastfallnachweis erforderlich ist, mit Lastübertragungsteilen,
insbesondere Stäben (struts), die mit ihren an beiden
Enden angeordneten Gelenken befestigt sind.

Es sind Stützvorrichtungen für Rohrleitungen bekannt,
die die Rohrleitung durch die Stäbe (struts) in mindestens eine der X-, Y- oder Z-Richtungen und in der
Drehrichtung der Rohrleitung um die Rohrachse halten.
Diese Rohrleitungsstützungen werden häufig in Kernkraftwerken verwendet und meistens durch einen Computer
berechnet. Dabei ist es eine unabdingbare Forderung,
daß die Rohrleitung neben den bauseitigen Anforderungen
nur in der von der Computer-Stressberechnung (Beanspruchungsberechnung) geforderten Richtung gestützt
wird. Hierzu ist es bekannt, formschlüssige Stahlkonstruktionen an jedem Stützpunkt der Rohrleitung anzu-

34 205 EU
HC/Be

ordnen, oder aber eine kraftschlüssige Verbindung
mittels Rohrschellen zu schaffen, an denen Stäbe
(struts) angelenkt sind, die an beiden Enden Gelenke
aufweisen.

Diese für Konstruktion, Material und Berechnung sehr
aufwendigen Lösungen schaffen ein hohes Sicherheitsrisiko, da durch die kraftschlüssige Verbindung vom
Computer-Stressprogramm nicht erfaßbare zusätzliche
Bedingungen und Kräfte in den Unterstützungspunkt einfließen können, was eine Zerstörung der Unterstützungskonstruktion und/oder der Rohrleitung zur Folge haben
kann.

- Bauseitig ist viel Freiraum erforderlich.

- Solche Konstruktionen sind sehr gefährdet durch
  Schwingungen in bestimmten Frequenzbereichen.

- Druckstöße und andere dynamische Kräfte werden bei
  einer Überbelastung der Stützung auf die Rohrleitung übertragen.

- Durch die Vielzahl der auftretenden Momente ist
  eine sehr große Bemessung der stützenden Bauteile
  erforderlich.

- Darüber hinaus ist die Absicherung gegen dynamische
  Kräfte sehr schwierig, da ihre Ermittlung und Bestimmung sehr komplex und unzuverlässig ist.

Beide Methoden, die formschlüssige Stahlkonstruktion wie die kraftschlüssige, starre Verbindung mittels .
Rohrschellen, zwängen der Rohrleitung durch das Vorhandensein von Kraft-, Last-, Biege- und Torsionsmomenten (insbesondere im dynamischen Bereich) hohe,
die Sicherheit und Lebensdauer der Bauteile schädigende Belastungen auf. So werden Kriechvorgänge und
Zeitstandverhalten in ihrer zerstörerischen Eigenschaft beschleunigt und verstärkt, was dann als Stützungsfehler nicht unbedingt am Stützungspunkt zum
Schaden führen muß. Vielmehr wandern die Belastungsspitzen je nach Belastungsfall im Gesamt-System und
zerstören Schwachstellen wie etwa Schweißstellen und
andere Verbindungsstellen oder rufen Haarrisse an den
Rohrleitungsbauteilen hervor. Ebenso sind alle Komponenten und Anschlüsse wie Pumpen etc. gefährdet, da
die Nachteile dort aufaddiert auftreffen können.

Besonders die Momentbelastung bei der Kraft-/Last-
Ableitung in Bauwerksteile ist sehr problematisch. So
werden schwierige Nachweise von Wand-, Boden- und
Deckenplatten erforderlich, da die Gefahr der Zerstörung einer Platten-Verankerung durch die Anschlußmomente sehr groß ist.

Um Schwingungen der zu stützenden Teile, z.B. durch
ein Erdbeben erzeugt, zu verhindern, ist eine steife
Halterung erforderlich. Hierdurch kann aber die Stützvorrichtung keine Verschiebungen aufnehmen, die im
Bauwerk durch Katastrophen, wie Erdbeben, Explosionen
oder Flugzeugabstürze, entstehen.

Der Erfindung liegt die Aufgabe zugrunde, mit dem ge-

- 4 -

ringst möglichen Aufwand an Berechnungs und Konstruktionsarbeit und mit einem sehr hohen Sicherheitsgrad, insbesondere im Kernkraftwerksbau, Stützvorrichtungen der eingangs genannten Art zu schaffen, die die Bewegungen der zu stützenden Teile nur in der gewünschten Richtung begrenzen. Auch ist es Aufgabe der Erfindung, eine Stützvorrichtung zu schaffen, die eine hohe Steifigkeit aufweist und dennoch Bewegungen und Verschiebungen des Bauwerks, der Anlage und der zu stützenden Teile aufnehmen kann.

Diese Aufgabe wird erfindungsgemäß dadurch gelöst, daß das zu stützende Teil von einem feststehenden Rahmen oder Rahmenteil umgeben ist, an dem die Lastübertragungsteile angelenkt sind, wobei das zu stützende Teil im Rahmen oder Rahmenteil in mindestens einer Bewegungs- oder Drehrichtung frei beweglich gelagert ist, und/oder daß zusätzlich zu den am Bauwerk oder der Anlage und am zu stützenden Teil befestigten Gelenkstellen mindestens eine weitere Gelenkstelle zwischen den Lastübertragungsteilen angeordnet ist, über die das zu stützende Teil gehalten ist und an der nur Lastübertragungsteile angelenkt sind.

Die erfindungsgemäße Lösung weist ein Rahmenteil auf, das durch entsprechend den bauseitigen Forderungen angeordnete Stäbe (struts) in der jeweiligen Position gehalten wird. Die Rohrleitung wird am Unterstützungspunkt derart umfaßt, daß nur die vom Stress geforderte Richtung der Rohrleitungsbewegung gestoppt wird. In der freigelassenen Richtung kann die Rohrleitung sich dann ungehindert bewegen, was genau
der Berechnungsmethode des Computer-Stressprogramms
und der Rohrleitungsfunktion entspricht. Somit können
keine zusätzlichen und/oder unkontrollierten Bedingungen und/oder Kräfte aus der Rohrleitung in den
Unterstützungspunkt einwirken. Die Kräfte im Rahmen
(Distanzhalter) werden über die Gelenkstütze (struts)
- ohne schädliche Rückwirkung auf die Rohrleitung -
momentfrei ins Bauwerk eingeleitet.

Struts sind Bauelemente (etwa Rohre mit Gelenkenden),
die für bestimmte Kraftübertragungsfälle konstruiert
und statisch belegt sind. Diese Struts können gemäß
der Erfindung aber auch durch andere, gleichwertige
Bauelemente ersetzt werden. Die mit der Erfindung
erzielten Vorteile bestehen insbesondere darin, daß
eine vereinfachte Unterstützungsausführung, den bauseitigen Bedingungen angepaßt, das Sicherheitsrisiko
bei der Berechnung, Konstruktion und im Betrieb, z.B.
eines Kernkraftwerks, erheblich gegenüber dem Stand
der Technik verringert. Bekannte und beherrschbare
Berechnungsmethoden sind ausreichend, um alle Bedingungen und Kräfte in den Unterstützungselementen genau
nachzuweisen, so daß eine Garantie für die Ausführung
übernommen werden kann. Reibungen können durch entsprechende Positionierung der die Rahmen haltenden
Stäbe weitgehendst vermieden werden. Für die so überprüfbare Ausführung und Funktion können Arbeits-,
Prüf- und Abnahmerichtlinien geschaffen werden. Damit
ist das Sicherheitsrisiko insbesondere bei Kernkraftwerken in einem der gefährdetsten Punkte erheblich

- 6 -

reduziert und wird bei richtiger Handhabung der Erfindung sogar vollkommen beherrscht.

Um solche Rahmen (Distanzhalter), die jeweils für
einen bestimmten Unterstützungspunkt an der Rohrleitung hergestellt werden, vielseitiger in ihrer Handhabung für Berechnung, Konstruktion und Fertigung zu
gestalten, können Paß- und/oder Lagerstücke in das
Rahmenteil eingebracht werden. Ferner können Anschlüsse
für Stäbe (Struts) angebracht werden. So kann eine für
jeden Unterstützungsfall verwendbare Baureihe von Rahmen hergestellt werden, die auch Anwendung finden,
wenn andere Bauelemente als Stütze (Struts) zum Übertragen der Stützkräfte ins Bauwerk benutzt werden.

Ein erster, wichtiger Festpunkt wird dadurch erreicht,
daß mindestens zwei Lastübertragungsteile an einer
einzigen Anlenkstelle des Rahmens oder eines Festpunktes um dieselbe Achse drehbar gelagert sind. Hierdurch wird ein Festpunkt geschaffen, der ein Verdrehen des Rahmens oder Rahmenteils in einer Ebene verhindert. Ohne einen solchen Festpunkt mit zwei struts
wird durch die struts eine Gelenkkette gebildet, die
es nicht ermöglicht, die Bewegungen des Rahmens oder
Rahmenteils in allen Richtungen zu stoppen.

Durch den Einbau von Druck- und/oder Zugfedern in das
Stab-Rahmen-System kann zusätzlich eine kraft-/lastabhängige Stützung der Rohrleitung erfolgen. Die
Federn werden dann nur in Stützkraftrichtung belastet
und unter Berücksichtigung ihrer Federkonstanten - oder konstantwirkend eingebaut - in der Rohrbelastungsberechnung berücksichtigt. Insbesondere die
Abstützung der Rohrleitung in Richtung der Wärmedehnung wie in Richtung dynamischer Krafteinwirkung
über Federstützkraft entlastet die Rohrleitung. Dabei
wird - anders als bei starren Gegenlagern - eine
natürliche Rohrleitungskompensation und ein Kräfteausgleich erreicht, bei dem Zwängungen und Momente
insbesondere koaxial zur Rohrleitung entfallen. Der
Federanschluß an der Rohrleitung kann mittels Rohrschelle kraftschlüssig erfolgen; Voraussetzung dazu
ist, daß die Feder selbst angelenkt ist. Nachdem die
Vorgaben so erfüllt und abgesichert sind, können
keine unkontrollierten, zusätzlichen Bedingungen
und/oder Kräfte aus dem Stützungspunkt auf die Rohrleitung einwirken.

Hierdurch wird bei Bauwerken und Anlagen eine Technik
geschaffen, mit der

- die Strukturbedingen, welche die EVA = Einwirkung
  von außen - weitgehendst vorgibt, abgesichert
  werden können,

- es möglich wird, die vorhandene EVA aus dem Bauwerk nach innen abzusichern,

- die Belastung der inneren Systeme und deren Komponente zum Gebäude abgesichert wird.

Diese Lösung erlaubt es, die äußeren und inneren Pro-

- 8 -

blemkreise in für sich weitestgehend unabhängig voneinenader getrennte Bereiche zu isolieren, zu analysieren und vollständig zu beschreiben.

Es wird weitestgehend möglich sein, auf die aufwendigen Methoden nach dem Stand der Technik verzichtend
zu einer weitaus zuverlässigeren und einfacheren Absicherung der jeweiligen Lastfälle zu kommen, und
darüber hinaus sich selbstregelnde Lastfall- und/oder
verfahrensabhängig gesteuerte Systeme zu schaffen,
die eine optimale Material-, Anlagen- und Verfahrensausnutzung ermöglichen. Auch Randprobleme, wie die
häufig erhobene und sich gleichzeitig gegenseitig ausschließende Forderung nach Flexibilität und Steifigkeit, werden so ebenso wie die Gleitreibung fast gänzlich beseitigt.

Ein wesentlicher Bestandteil ist der Vorteil, daß über
die so mögliche Stutzenentlastung an allen wichtigen
Anlagenkomponenten, wie z.B. Druckgefäßen und Pumpen,
momentfreie und lastarme Anschlüsse ausgebildet werden
können, auch wenn dort eine ständige oder wechselnde
Wärmeausdehnung stattfindet.

Die vorteilhafte Anwendung wird bestimmt durch die
detaillierte Analyse der Lastfallstrukturmechanik,
die logische Verknüpfung solcher Ergebnisse und die
Umsetzung derselben in entsprechend kybernetisch und/
oder kinematisch kompensierte bzw. ausgelenkte Mechanik. So wird auch die Wirksamkeit einer Lastfallisolierung vorgegeben, die eine wesentliche Voraussetzung
für eine vorteilhafte Anwendung ist.

- 9 -

Es wird mit der Anwendung des EG-Verfahrens eine
neue Konzeption zur Planung und Realisierung solcher
Anlagen geschaffen, die neue Maßstäbe auch in der
Lehre der angewandten Kybernetik und Physik vorgibt.

Die Rohr- und Behälterwände können sehr dünn sein,
da Dynamik nicht mehr aufgenommen werden muß.

Die Stützvorrichtung läßt ein Ausweichen der Einbauten
und Teile zu und erzeugt dabei dennoch eine hohe Steifigkeit. Vier, fünf, sechs oder mehr miteinander verbundene Gelenkpunkte sind entgegen der gängigen Lehre
nicht offen, d.h. daß sie, solange die (äußeren)
Anlenkstellen am Gebäude oder an der Anlage nicht bewegt werden, zueinander unbeweglich sind, wobei
dennoch eine Bewegung der Anlenkstellen am Gebäude
oder an der Anlage nicht auf das gestützte Teil übertragen wird.

Vorteilhafte Ausgestaltungen der Erfindung sind in
den Unteransprüchen aufgeführt.

Ausführungsbeispiele der Erfindung sind in den Zeichnungen schematisch dargestellt und werden im folgenden näher beschrieben. Es zeigen:

Fig. 1    ein in den Achsen X, Y und Z isometrisch
          dargestelltes Stress-Symbol;

Fig. 2    eine isometrische Darstellung der Rohr-
          leitung;

- 10 -

Fig. 3        eine entsprechend dem Schnitt A-A in

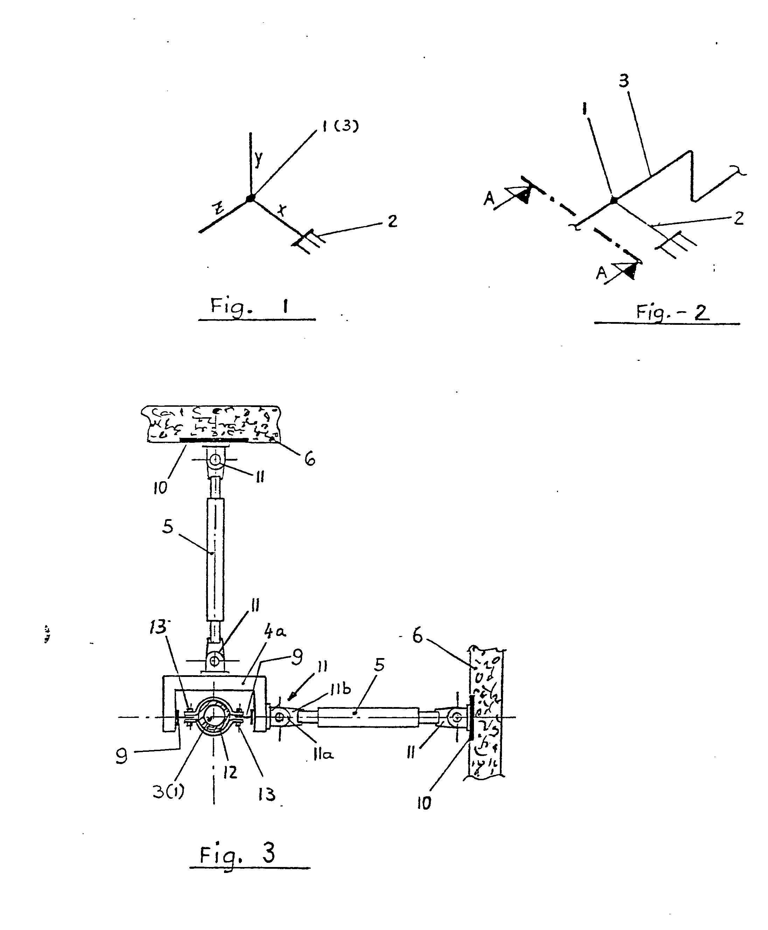

              Fig. 2 dargestellte erste Ausführung der
              Erfindung;

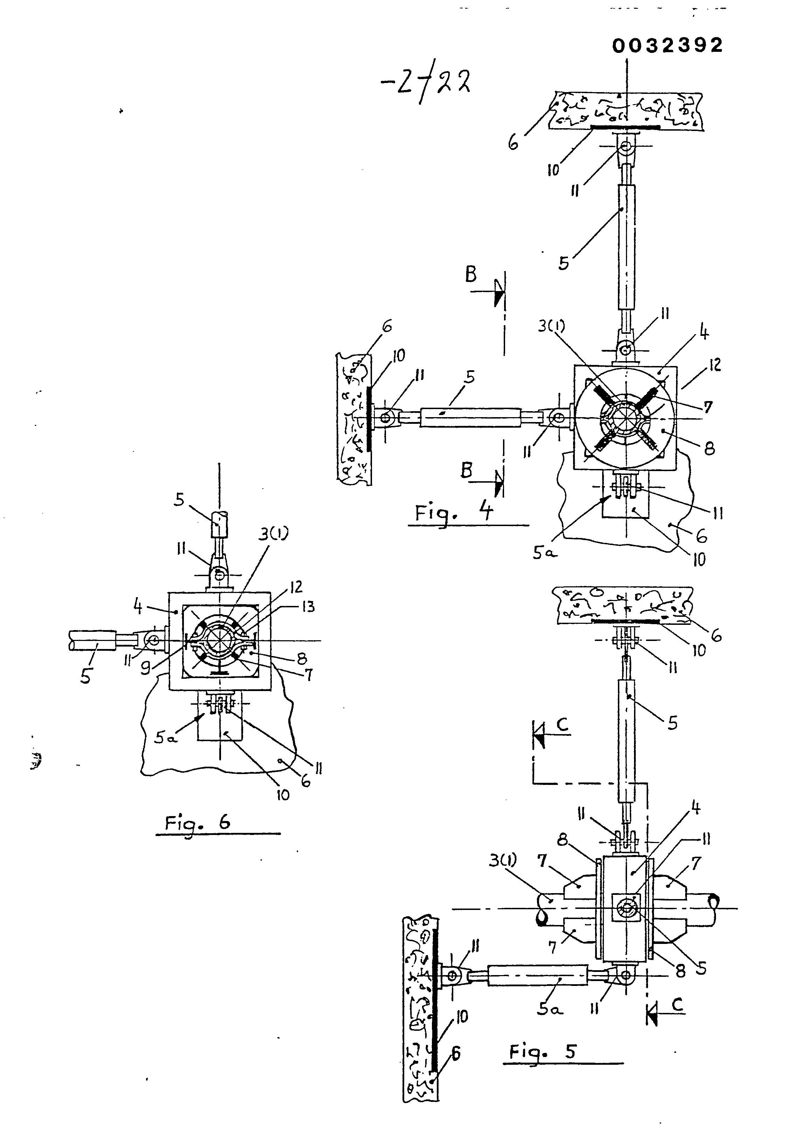

Fig. 4        eine zweite Ausführung mit geschlossenem,
              die Rohrleitung voll umfassendem Rahmen;

Fig. 5        das in Fig. 5 dargestellte Ausführungsbeispiel in einer Ansicht nach B-B;

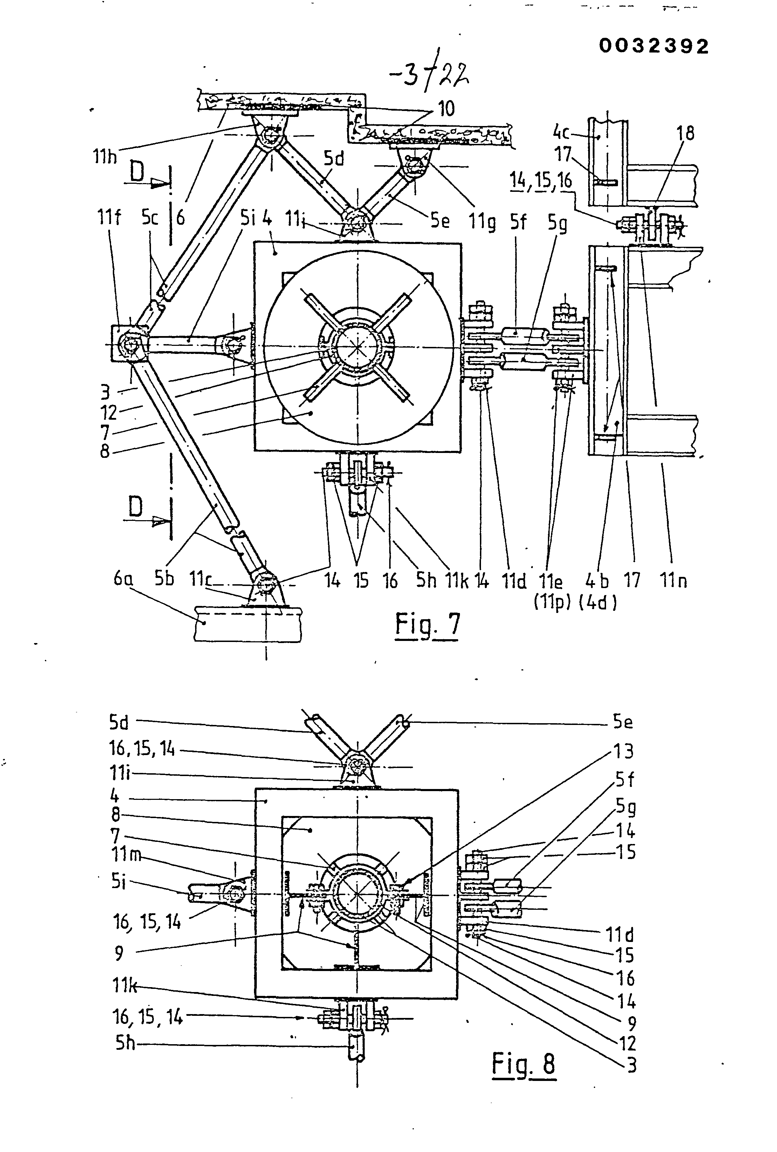

Fig. 6        einen Schnitt nach C-C in Fig. 5;

Fig. 7        ein weiteres Ausführungsbeispiel der Erfindung mit frei angelenkten Stäben
              (Struts) und der Verbindung zu anderen
              Rahmen (Distanzhaltern);

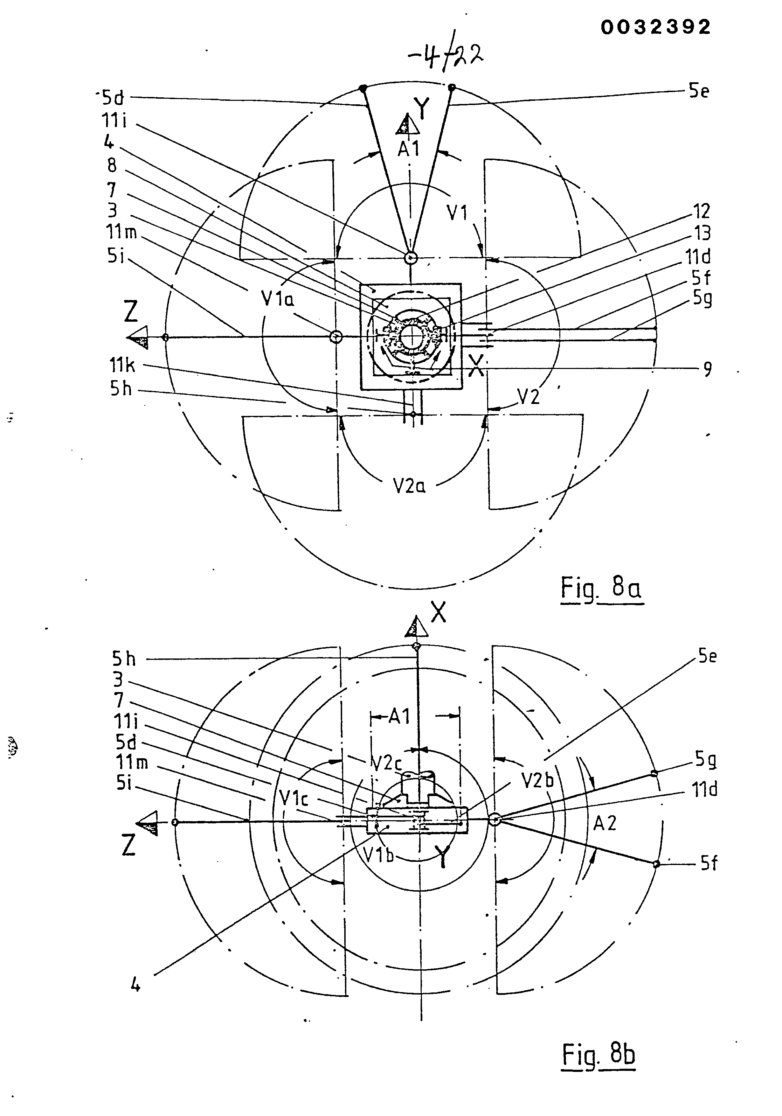

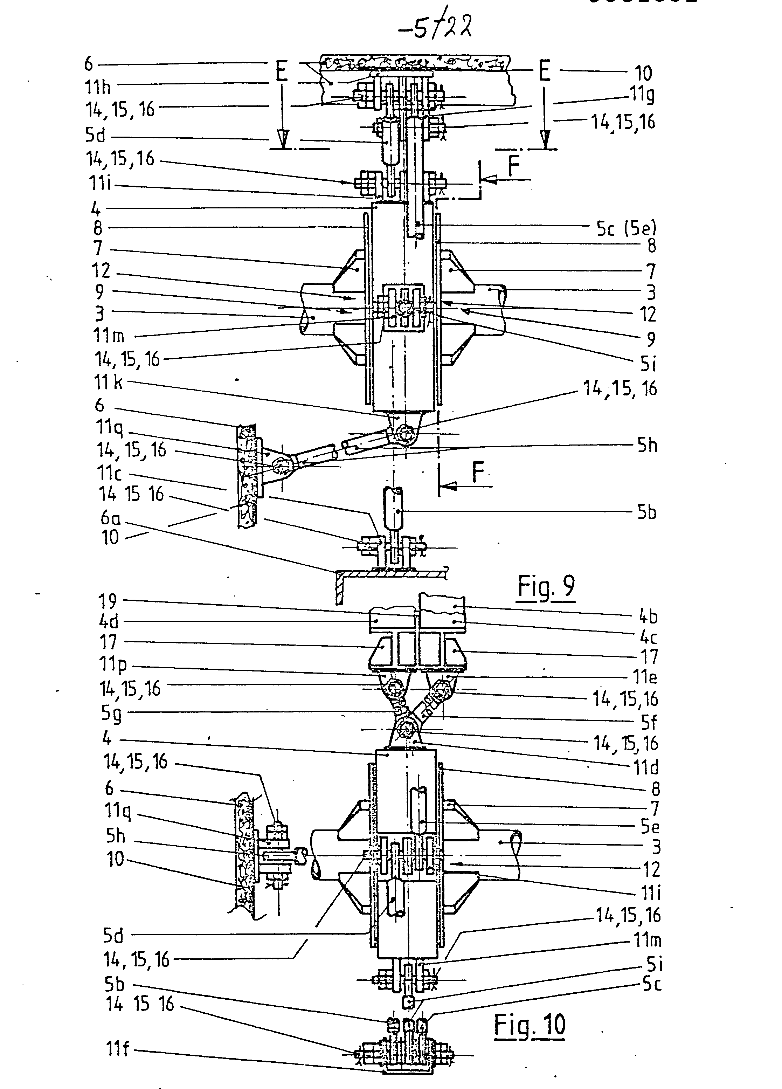

Fig. 8        einen Schnitt nach F-F in Fig. 9;

Fig. 8a       eine schematische Darstellung der möglichen, räumlichen Anordnung von Stäben
              (Struts);

Fig. 8b       die Darstellung in Fig. 8a in einer Ansicht nach unten über die Y-Raumachse;

Fig. 9        das in Fig. 7 dargestellte Ausführungsbeispiel in einer Ansicht nach D-D;

Fig. 10       einen Schnitt nach E-E in Fig. 9;

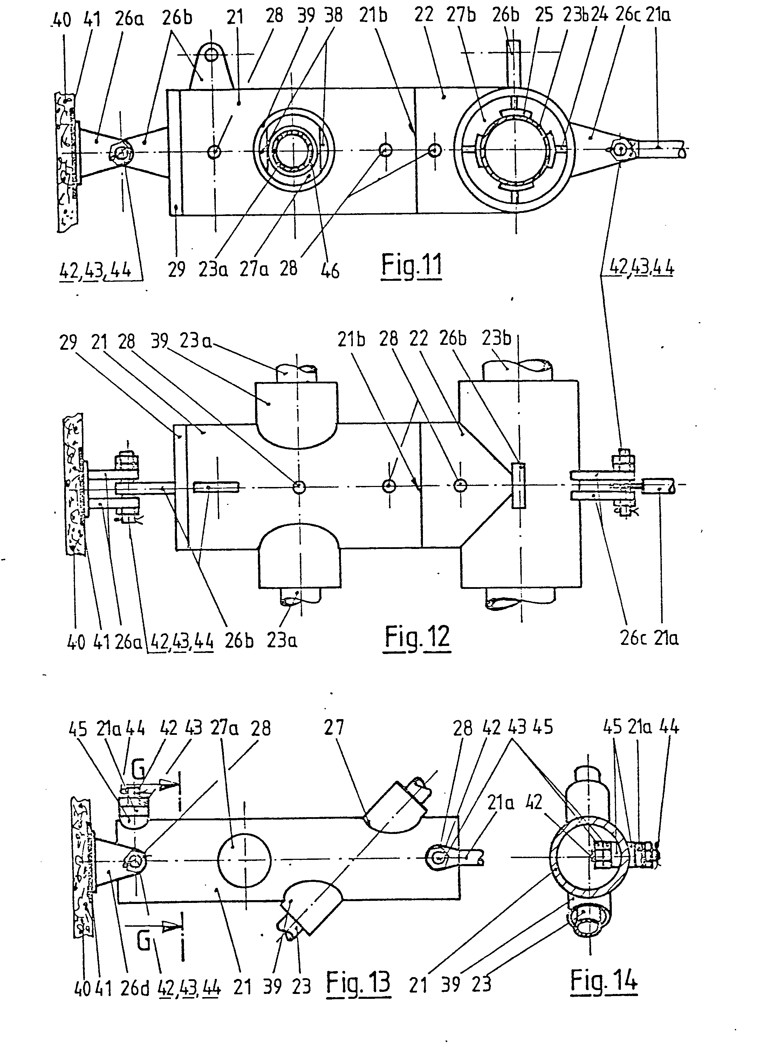

Fig. 11        ein weiteres Ausführungsbeispiel, bei dem der Rahmen (Distanzhalter) direkt am Festpunkt angelenkt und an dem ein zweiter Rahmen (Distanzhalter) befestigt ist;

Fig. 12        das in Fig. 11 dargestellte Ausführungsbeispiel in der Draufsicht;

Fig. 13        ein weiteres Ausführungsbeispiel der Erfindung mit schräger Rohrlagerung und einer zweiten Öffnung koaxial als Rahmen (Distanzhalter);

Fig. 14        einen Schnitt nach G-G in Fig. 13;

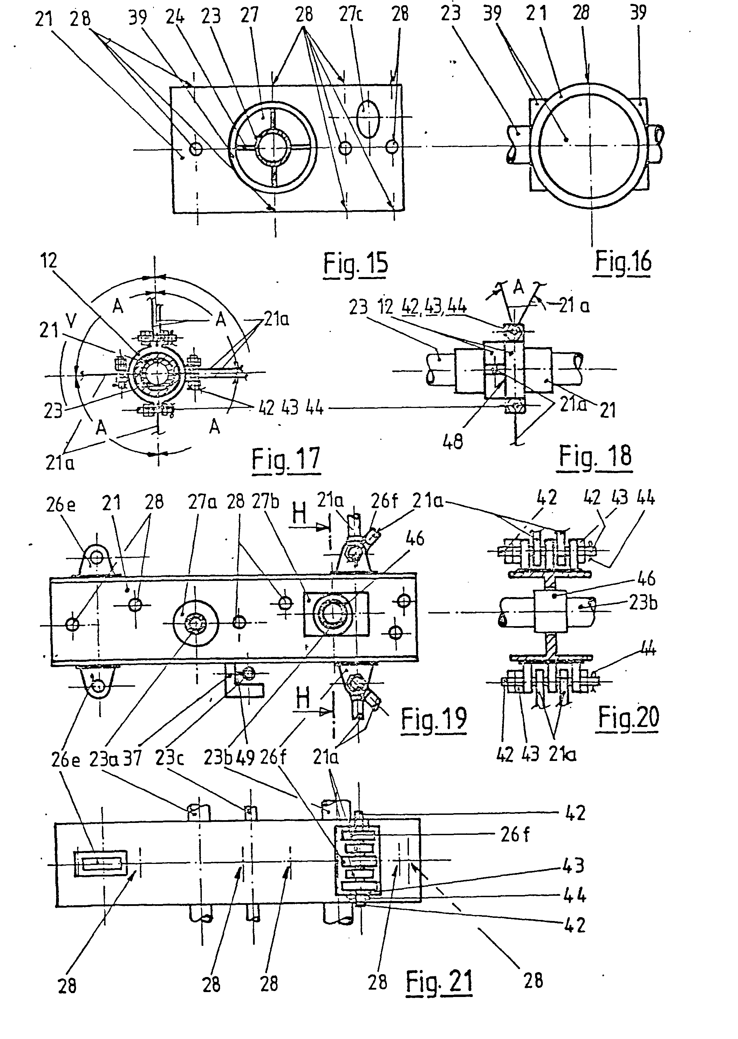

Fig. 15        ein Ausführungsbeispiel der Erfindung mit zwei Öffnungen zur Rohrlagerung im Rahmen (Distanzhalter);

Fig. 16        eine Seitenansicht der Darstellung in Fig. 15;

Fig. 17        ein Ausführungsbeispiel, bei dem der Rahmen (Distanzhalter) kraftschlüssig von Rohrschellen gehalten wird;

Fig. 18        eine Seitenansicht der Darstellung in Fig. 17;

Fig. 19        ein Ausführungsbeispiel mit einer Lager-

- 12 -

stelle für ein Rohr an der Außenseite des
Rahmens (Distanzhalters);

Fig. 20     einen Schnitt nach H-H in Fig. 19;

Fig. 21     eine Draufsicht der Darstellung in Fig. 19;

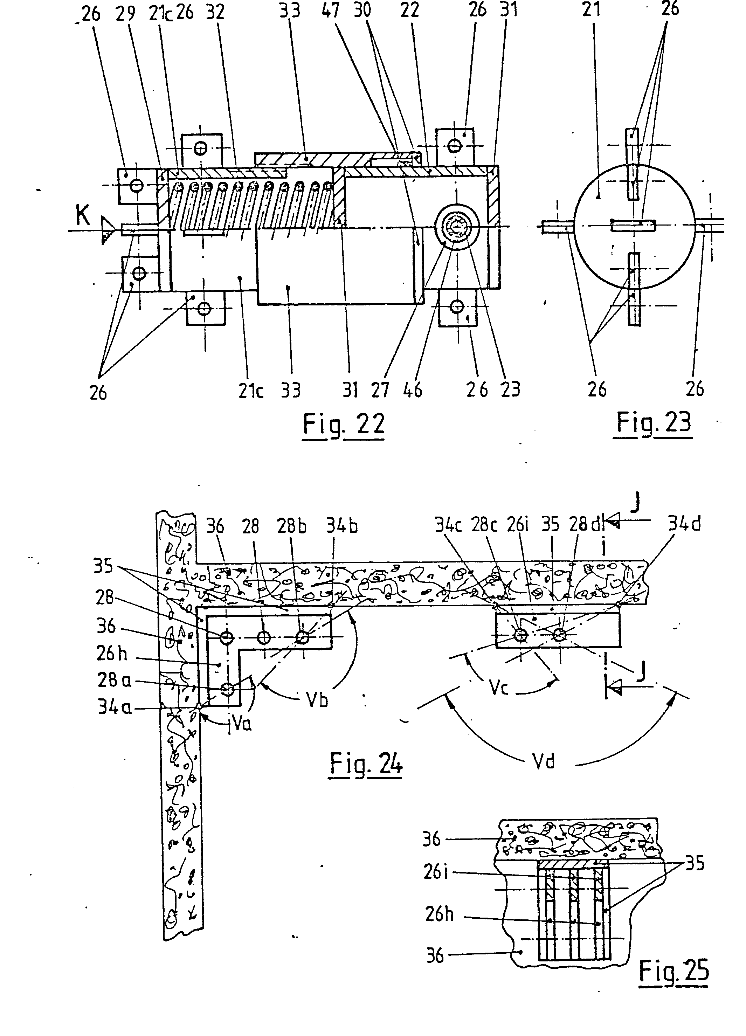

Fig. 22     ein Ausführungsbeispiel der Erfindung mit
            federnd gelagertem Rahmen (Distanzhalter);

Fig. 23     das in Fig. 22 dargestellte Ausführungsbeispiel in einer Seitenansicht;

Fig. 24     ein Ausführungsbeispiel der Erfindung, den
            Festpunkt-Stab-Anschluß betreffend;

Fig. 25     einen Schnitt nach J-J in Fig. 24;

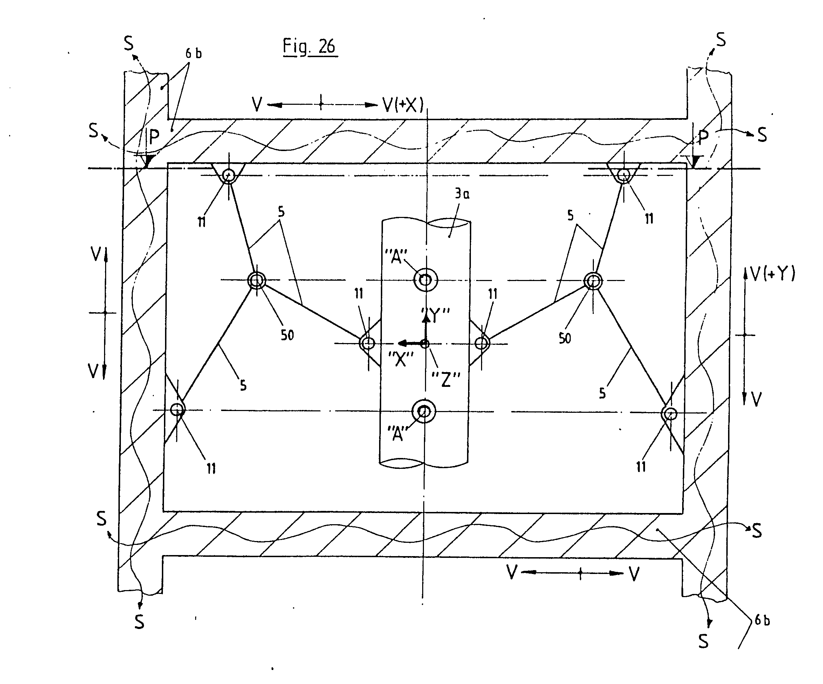

Fig. 26     eine Vorderansicht eines in einem Rahmen
            eines Gebäudes senkrecht stehenden Behälters
            oder Rohrabschnittes mit vier seitlichen
            Stützvorrichtungen mit je drei Stäben;

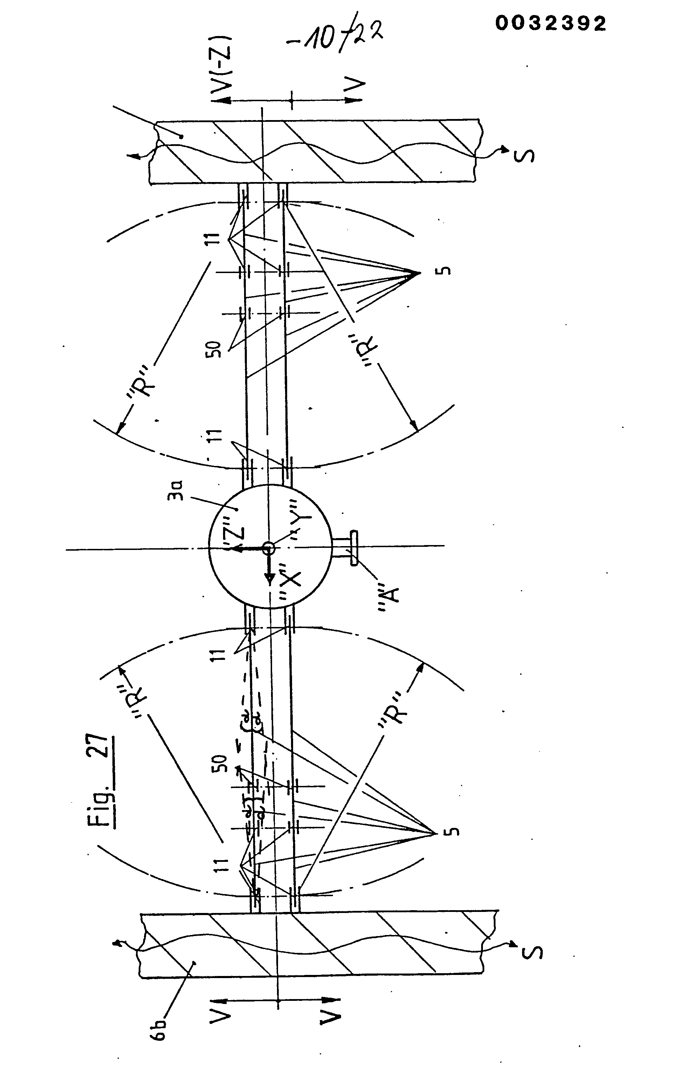

Fig. 27     einen Schnitt nach P-P in Fig. 26;

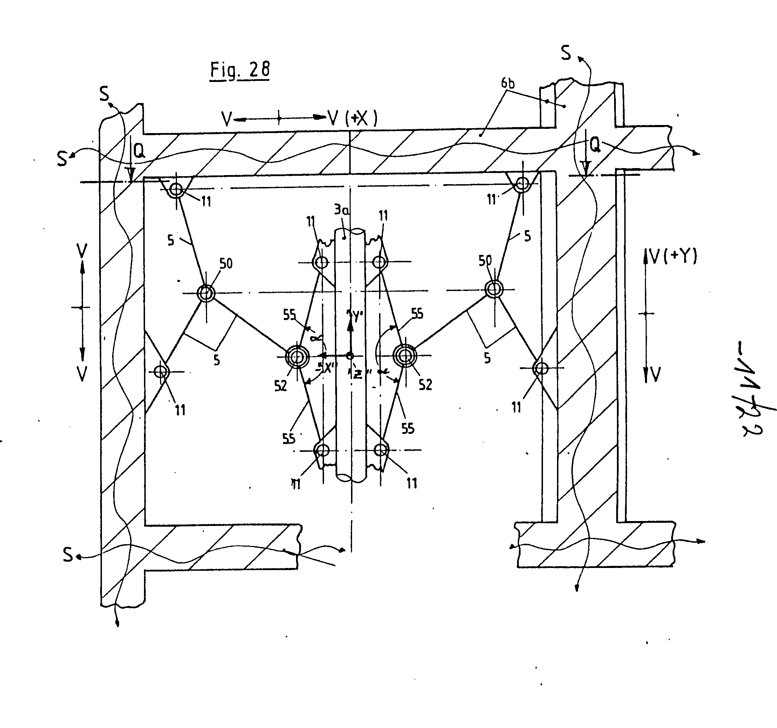

Fig. 28     eine Vorderansicht eines in einem Raum senkrecht stehenden Rohres mit drei Stützvorrichtungen mit je fünf Stäben;

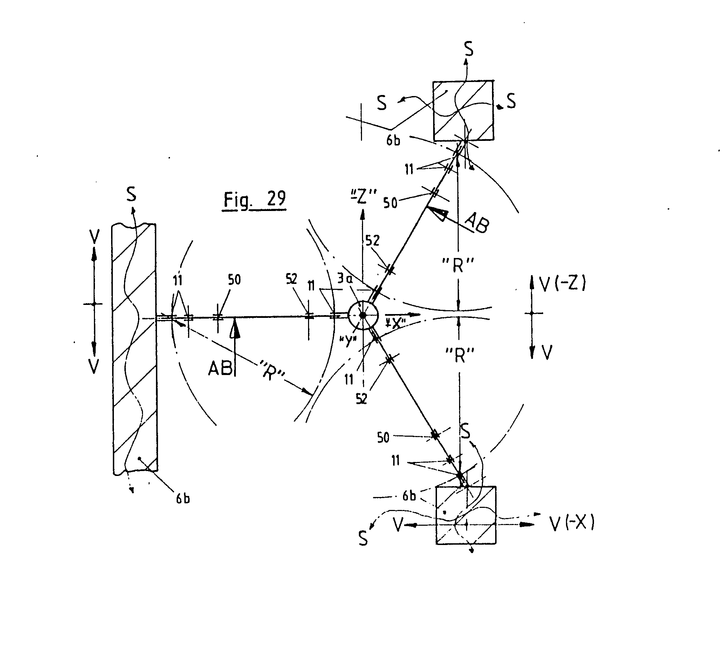

Fig. 29     einen Schnitt nach Q-Q in Fig. 28;

- 13 -

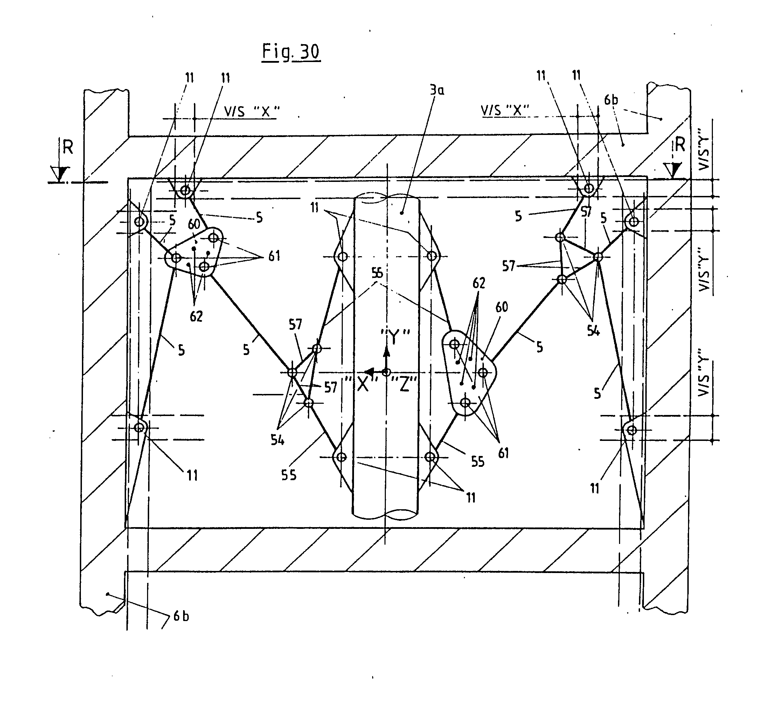

Fig. 30    eine Vorderansicht eines in einem Raum
           senkrecht stehenden Rohres mit drei
           Stützvorrichtungen mit jeweils mehreren
           zueinander parallelen Stäben;

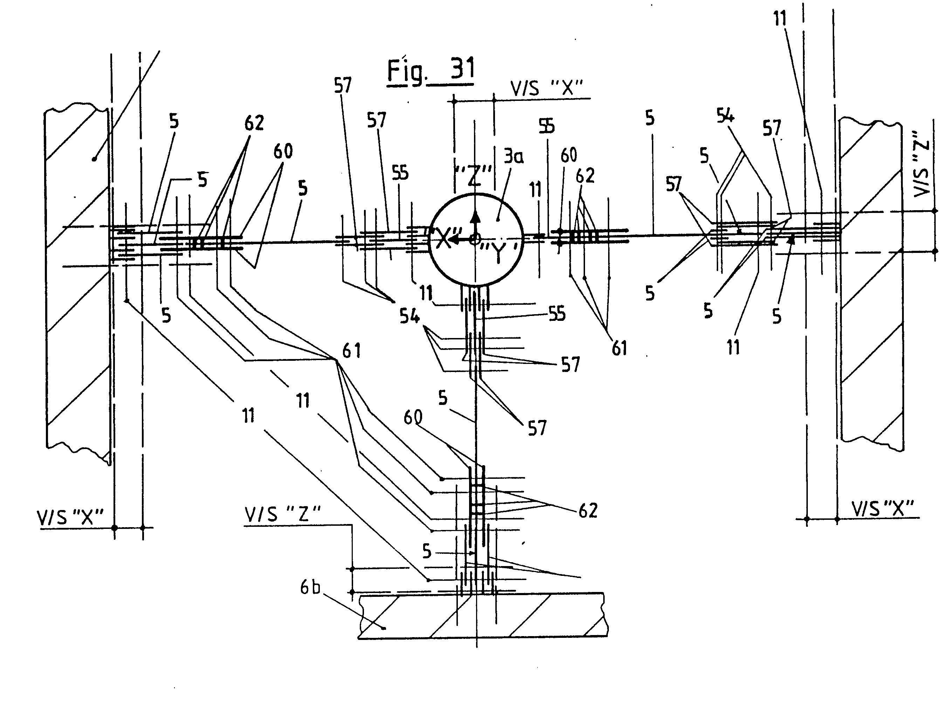

Fig. 31    einen Schnitt nach R-R in Fig. 30;

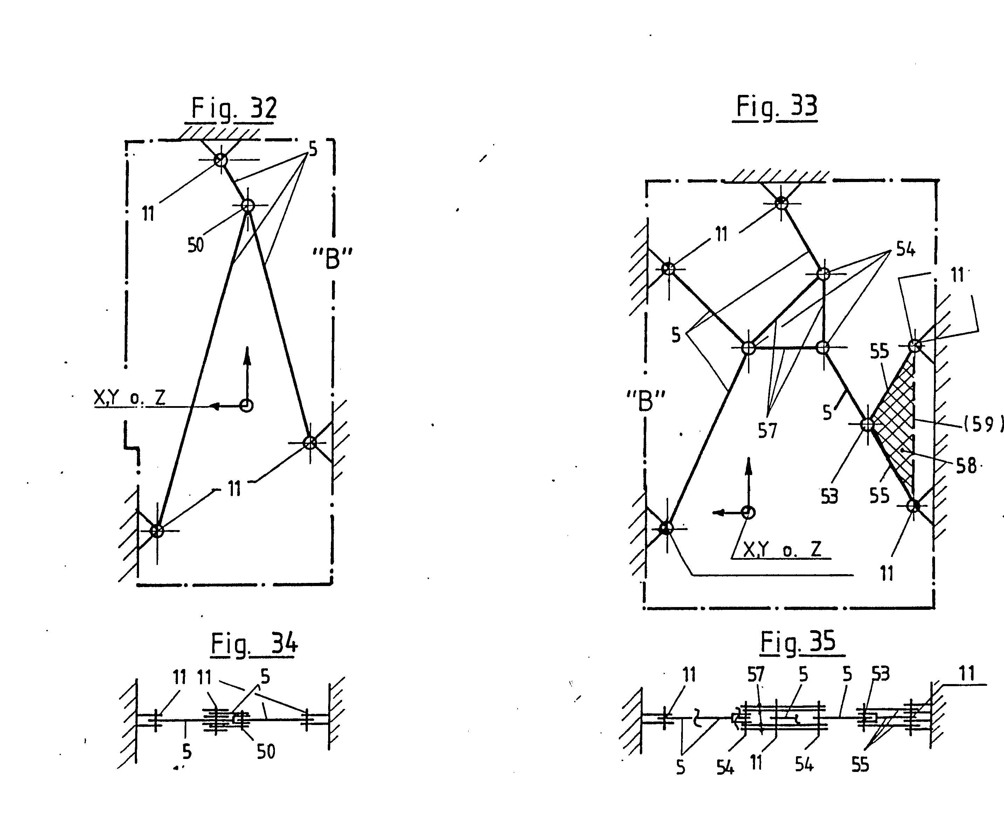

Fig. 32    ähnlich Fig. 26 eine Vorderansicht einer
           an Raumwänden oder Teilen befestigten
           einzigen Gelenkkette mit drei Stäben,
           wobei das zu stützende Teil und die zweite Gelenkkette nicht dargestellt sind;

Fig. 33    eine Vorderansicht ähnlich Fig. 30 einer
           an Raumwänden befestigten Gelenkkette
           mit neun Stäben oder sieben Stäben und
           einem Flächenelement;

Fig. 34    eine Draufsicht auf die Gelenkkette nach
           Fig. 32;

Fig. 35    eine Draufsicht auf die Gelenkkette nach
           Fig. 33;

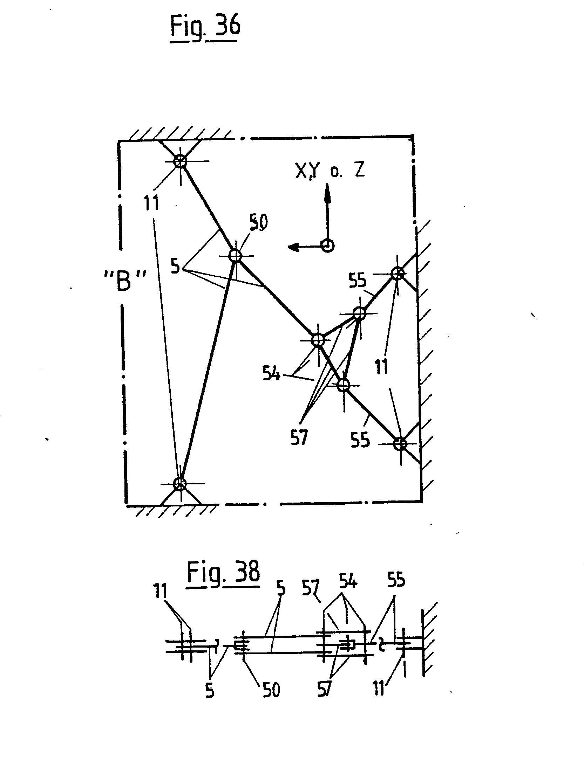

Fig. 36    eine Vorderansicht einer Gelenkkette
           ähnlich Fig. 30 und 33;

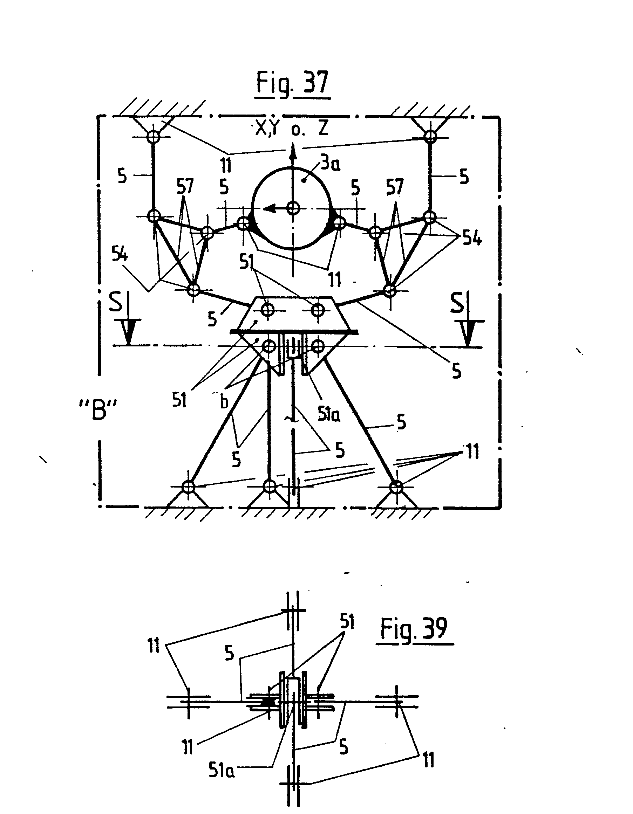

Fig. 37    eine Vorderansicht einer Stützung eines
           Behälters oder Rohres durch Gelenkketten,
           die sich auf einem Festpunkt abstützen,
           der unterhalb des Behälters oder Rohres
           liegt;

0032392

Fig. 38    eine Draufsicht nach Fig. 36;

Fig. 39    eine Draufsicht nach Fig. 37;

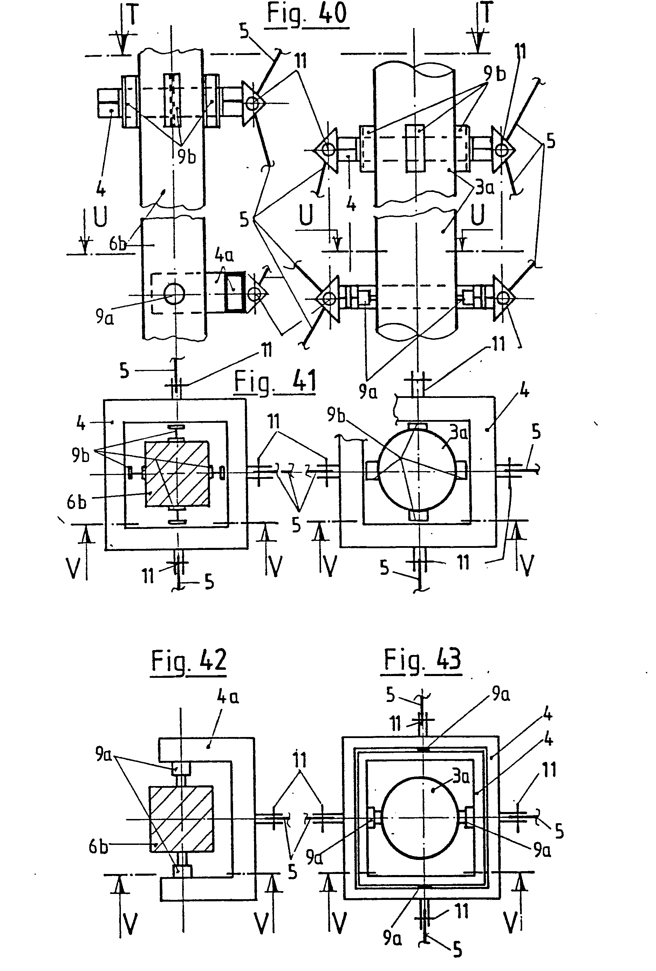

Fig. 40    einen Schnitt nach V-V in Fig. 41 mit
           einem ein Rohr umgebenden Rahmen und
           einer Bauwerksstütze, die auch von einem
           Rahmen umgeben ist;

Fig. 41    einen Schnitt nach T-T in Fig. 40;

Fig. 42    einen Schnitt nach U-U in Fig. 40;

Fig. 43    einen Schnitt nach U-U in Fig. 40;

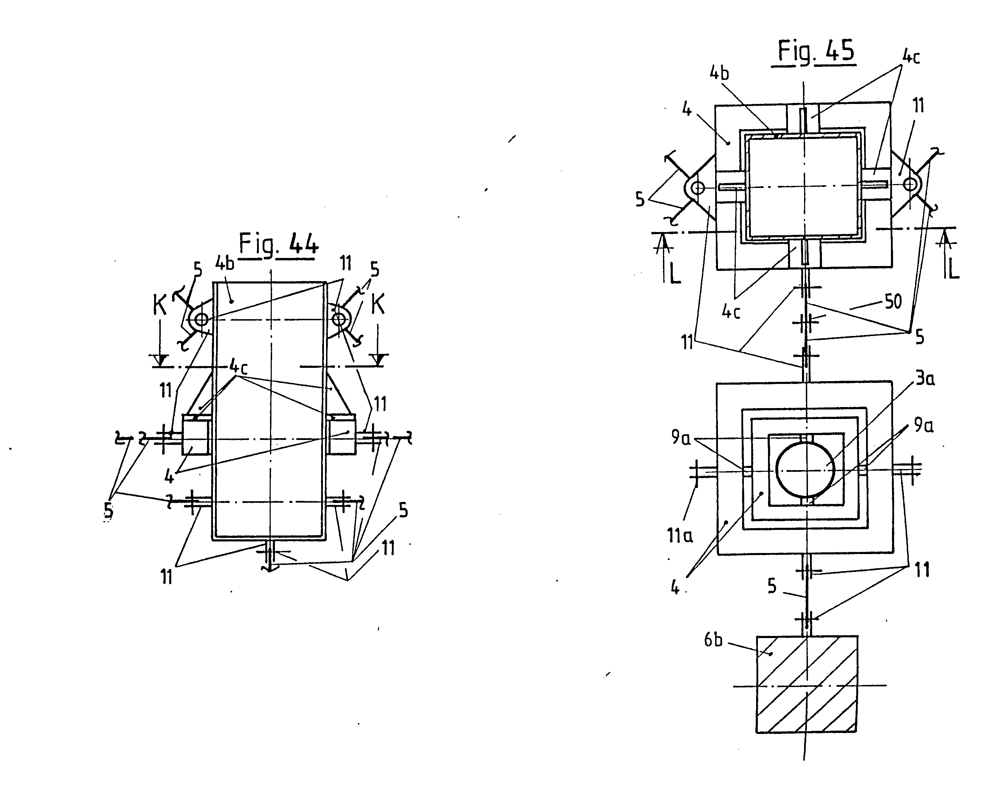

Fig. 44    einen Schnitt durch einen behälterförmigen Rahmen nach L-L in Fig. 45;

Fig. 45    einen Schnitt nach K-K in Fig. 44 mit
           unten daran angelenktem Doppelrahmen
           mit kardanischer Anlenkung;

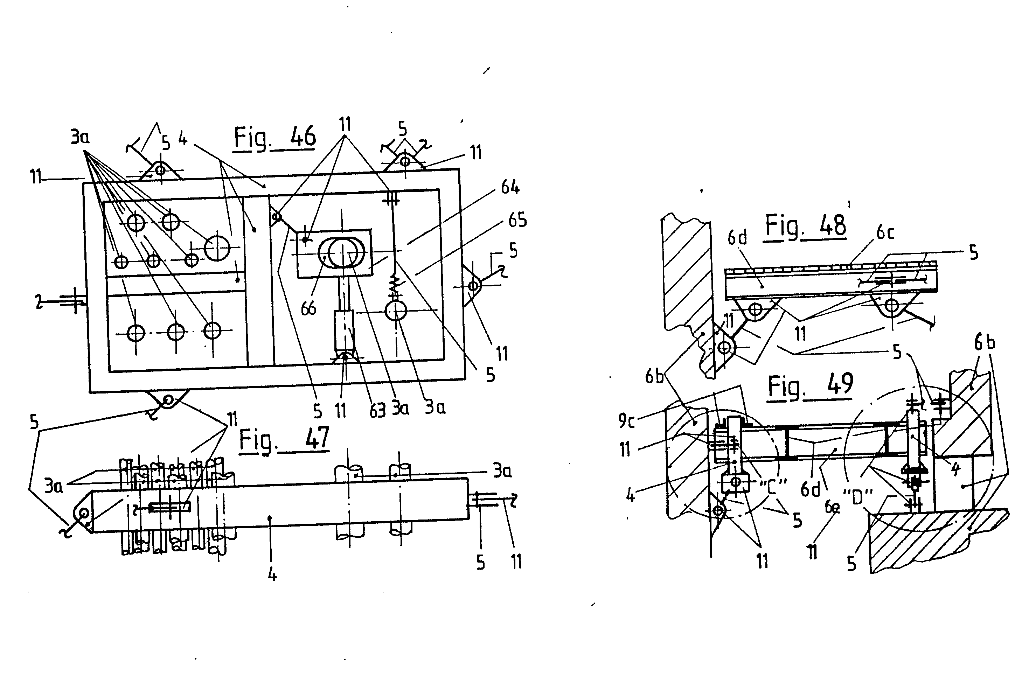

Fig. 46    eine Draufsicht auf einen Rahmen mit mehreren Rohrleitungen;

Fig. 47    eine Vorderansicht von Fig. 46;

Fig. 48    eine Seitenansicht einer an einem Bauwerk
           befestigten Bühne;

Fig. 49    eine Seitenansicht einer durch Rahmen an einem Bauwerk befestigen Bühne;

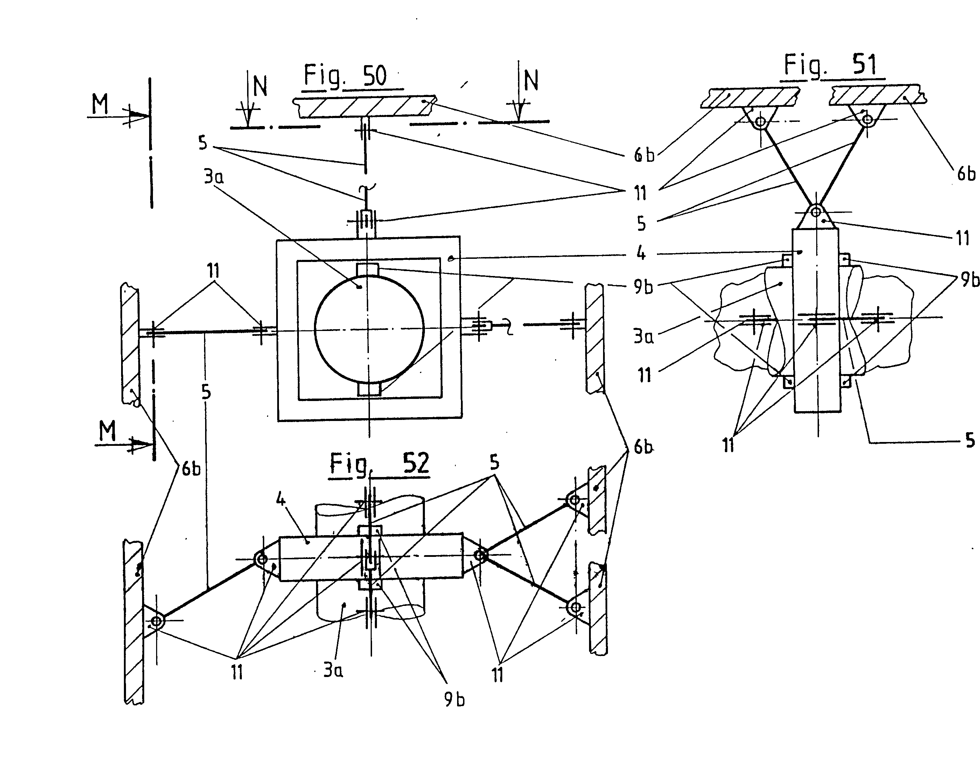

Fig. 50    eine Vorderansicht eines durch einen Rahmen gelagerten Rohres oder Behälters;

Fig. 51    einen Schnitt nach M-M in Fig. 50;

Fig. 52    einen Schnitt nach N-N in Fig. 50;

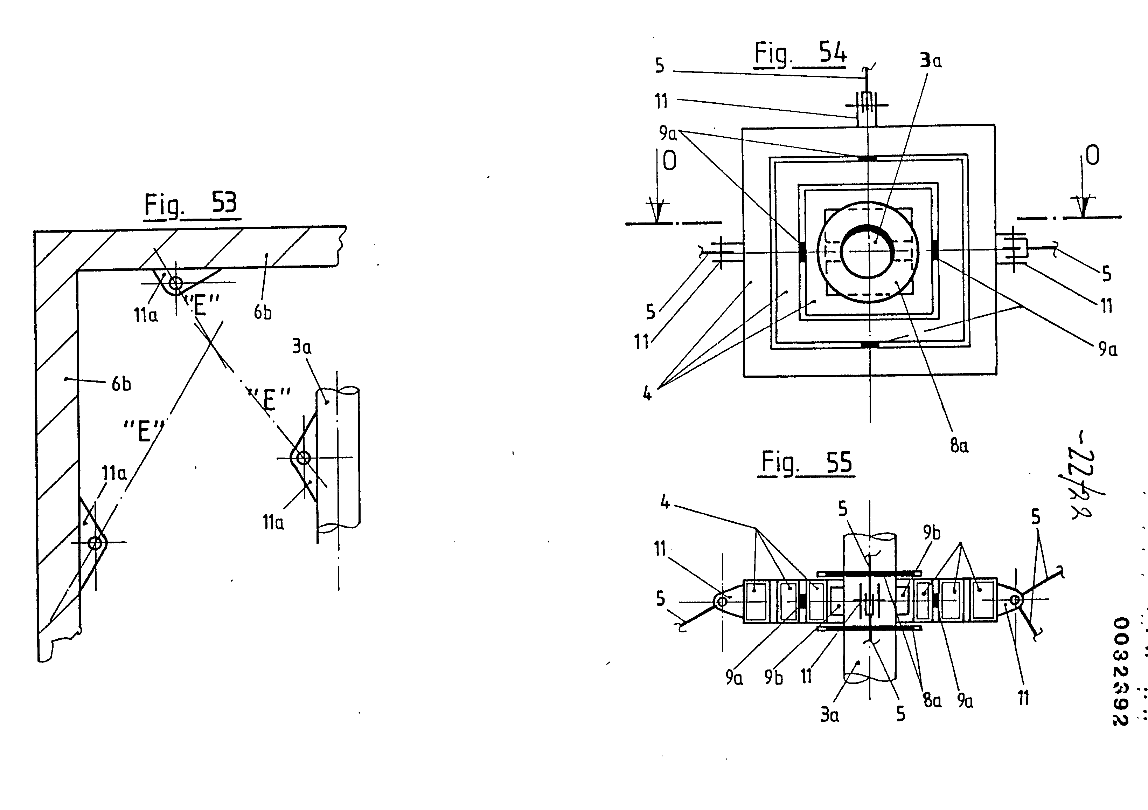

Fig. 53    Kraftflußrichtungen E, die durch die Stützfläche der Anlenkstellen verlaufen;

Fig. 54    eine Draufsicht auf drei ineinander gelagerte Rahmen; und

Fig. 55    einen Schnitt nach O-O in Fig. 54.

Rahmen in Verbindung mit Gelenkstäben (Struts) haben
als Rohrleitungsstüzungen die Aufgabe, die Rohrleitungsbewegung in einer oder mehreren und  und/oder
-Richtungen  der Raumachsen X, Y, Z und/oder in Drehrichtung um die Längsachse zu stoppen und die dabei
auftretenden Kräfte in ein entsprechendes Gegenlager
einzuleiten.

Der Rahmen ist als ein beliebig geformtes, jedoch am
Berührungspunkt mit der Rohrleitung über die gesamte
Bewegungsdistanz in deren Richtung flächig ausgebildetes, über ein Gelenk an mindestens zwei Stäben (Struts)
nahezu bewegungsfrei befestigtes Stützteil, welches entsprechend der zu stoppenden Bewegungsrichtung an
der Außenwand der Rohrleitung im Unterstützungsbereich so angeordnet wird, daß eine in Kraftrichtung
die Rohrachse durchdringende Linie beim Austritt
aus der Rohrwand dort mit der anliegenden Fläche des
Rahmens über die gesamte Bewegungsdistanz einen
rechten Winkel bildet. Dadurch wird die Unterstützungskraft exakt in der geforderten Richtung vom
Rahmen aufgenommen und in Achsrichtung der so am
Rahmen ausgerichteten Stäbe in ein entsprechendes
Gegenlager abgeleitet, ohne daß diese Stützteile
und/oder der Rahmen der Rohrleitungsbewegung folgen,
und ohne sich selbst, mehr als durch die Gelenkverbindung bedingt und für die Funktion zulässig, zu
bewegen. So werden durch eine formschlüssige Verbindung auch Schwingungsübertragungen vermieden, die
bei einer starren kraftschlüssigen Verbindung schädigend auf die Rohrleitung und Unterstützung einwirken
können.

Ein (Gelenk-)Stab (Strut) kann ein stabförmiges Stützteil
sein, welches an seinen Enden gelenkartig gelagert, geradlinig Kräfte in Richtung seiner Längsachse, aus einem Rahmer
in ein entsprechendes Gegenlager überträgt. Bei der Anordnung kann die Abweichung der Längsachse, von einem Gelenkpunkt zu dem anderen gemessen, um max. $5^{o}$ von der berechneten Wirkungslinie der Kraftrichtung abweichend einen
Kreisbogen beschreibend, zulässig sein. Diese Abweichung
beinhaltet schon eventuelle Bewegungen aus der Rohrleitung.

Gemessen an der Anlagefläche des Rahmens (gleich Computer-

- 17 -

Berechnungsachse) ist die günstigste Anordnung des Stabs
(= 0-Punkt-Stellung) diejenige, wo die Längsachse des Stabs
der Linie folgt, die, die Rohrachse in Kraftrichtung durchdringend, einen rechten Winkel mit der Anlagefläche des
Rahmens bildet. Eine Abweichung der Stab-Längsachse von
diesem Punkt aus gemessen sollte innerhalb eines Winkels
von 45$^{\circ}$ bleiben.

Stäbe, welche in einem Stützungspunkt Kräfte aus den verschiedenen Raumachsen X; Y und/oder Z übertragen, sollten
übereinander nur eine max. Annäherung von 45$^{\circ}$ aufweisen.
Dies bedeutet auch, daß ihre max. Entfernung im Bereich
zweier verschiedener in + oder - Richtung nebeneinanderliegender Raumachsen 135$^{\circ}$ beträgt. Bei Abweichungen der
Stab-Längsachse auf einem Kreisbogen bis max, 45$^{\circ}$ vom
0 Punkt muß die entsprechende Kraftkomponente berechnet
und berücksichtigt werden.

In Fig. 1 ist ein Abschnitt einer Rohrleitung 3 dargestellt, die an dem Stützungspunkt 1 in Richtung der X-Achse
gestoppt werden soll. Dabei wird, wie allgemein üblich und
für eine Vereinfachung der Berechnung, die X-Achse waagerecht und senkrecht zur Rohrlängsachse, die Y-Achse senkrecht und die Z-Achse koaxial zur Rohrlängsachse angenommen.
Das Stress-Symbol 2 zeigt an, daß in Richtung der X-Achse
nur in dieser Richtung die Rohrleitung 3 gestoppt bzw.
gehalten werden soll, während in den anderen Richtungen
als auch in Drehrichtung D um die Rohrleitungslängsachse
eine Bewegung zugelassen wird.

Der in der Fig. 2 dargestellte Rohrleitungsabschnitt unterscheidet sich von dem in Fig. 1 gezeigten nur dadurch, daß die Rohrleitung nach hinten hin zweifach abgewinkelt ist und die Schnittlinie A-A eingezeichnet wurde, von der aus das in Fig. 3 dargestellte Ausführungsbeispiel zu sehen ist. Die Fig. 1 und 2 stellen damit das Ausführungsbeispiel nach Fig. 3 symbolisch dar.

Das Ausführungsbeispiel nach Fig. 3 zeigt eine Rohrleitung 3 im Schnitt, die von einer zweiteiligen Rohrschelle 12 umgeben ist. Die beiden Teile der Rohrschelle 12 sind durch Schrauben 13 und Muttern aneinander befestigt, wobei zwischen den seitlichen Rohrschellenenden ein T-Profil 9 mit seinem Steg einliegt. Die zu beiden Seiten des Rohres angeordneten Schrauben 13 stecken in Öffnungen des Profilstegs, wobei das T-Profil 9 achsparallel zur Rohrleitungslängsachse angeordnet ist. Die Stege des T-Profils liegen damit waagerecht, so daß sie in X-Achsenrichtung Kräfte übertragen können. Der senkrechte Schenkel oder Flansch beider T-Profile liegen an den senkrechten Innenseiten der Schenkel eines U-Profils an, dessen waagerechter Boden oben angeordnet ist und das einen Rahmen 4a bildet, um die Rohrleitung in X-Achsenrichtung zu stoppen. Die beiden T-Profile 9 sind an dem Rahmen 4a innen nicht befestigt, sondern liegen gleitend an, so daß sich das Rohr in senkrechter Richtung auf- und abbewegen kann. Ferner kann sich das Rohr in seiner Längsrichtung bewegen und es kann sich um seine Längsachse drehen, wenn die Rohrschelle 12 nicht zu fest an dem Rohr angeschraubt ist.

Die in den Fig. 3 bis 6 gezeigten Stützvorrichtungen sind nur dazu da, das Rohr in bestimmten Richtungen zu halten.

- 19 -

An anderen Stellen der Rohrleitung befinden sich zusätzliche Unterstützungen, so daß die in Fig. 3 dargestellte Rohrleitung nicht aus dem Rahmen 4 heraus nach unten fallen kann.

An dem Rahmen 4a ist ein Gelenk 11 mit einer Gelenkhälfte 11a angeschweißt, in der eine Gelenkhälfte 11b eines aus einem Rohr bestehenden Stabes 5 um mindestens eine Achse drehbar befestigt ist. Bei dem in Fig. 3 gezeigten Ausführungsbeispiel ist die Drehachse achsparallel zur Rohrlängsachse. Alternativ können aber auch alle Gelenke 11 Kugelgelenke sein. Das auf der anderen Seite des Stabes 5 befindliche Gelenk 11 ist mit einer Gelenkhälfte an eine Platte 10 angeschweißt, die in einer Wand eines Bauwerks 6 befestigt ist. Der waagerechte Stab 5 nimmt Kräfte in X-Achsenrichtung auf und seine Längsachse befindet sich in einer waagerechten Ebene, durch die auch die Rohrleitungslängsachse verläuft. Der Stab 5 ist ein Fertigteil, das für bestimmte Kraftübertragungsfälle konstruiert und statisch errechnet ist.

Der Rahmen 4a wird ferner durch einen senkrechten Stab 5 gehalten, der wiederum mit an seinen beiden Enden angeordneten Gelenken am Bauwerk 6 und am Rahmen 4a befestigt ist. Die Längsachse des senkrechten Stabes 5 schneidet die Rohrleitungslängsachse. Im Gegensatz zum waagerechten Stab stoppt der senkrechte Stab 5 nicht die Rohrleitung 3, sondern hält nur den Rahmen 4a in seiner Lage.

Das in den Fig. 4 bis 6 gezeigte Ausführungsbeispiel unterscheidet sich von dem in Fig. 3 gezeigten in folgendem: der quadratische Rahmen 4 umgibt rundum die Rohrleitung 3 und die Rohrleitung wird durch die beiden seitlich ange-

- 20 -

ordneten T-Profile 9 nicht nur in + und - Richtung der X-
Achse gestoppt, sondern auch in - Richtung (d.h. nach unten)
der Y-Achse. Hierzu ist an der unteren Hälfte der Rohrschelle
12 ein T-Profil angeschweißt, das auf dem inneren Boden
des Rahmens 4 gleitend anliegt. Der Rahmen wird wiederum
durch Stäbe 5 in X- und Y-Achsenrichtung gehalten, wobei
der für die X-Achse zuständige Stab gegenüber dem in Fig.
3 gezeigten Ausführungsbeispiel auf der gegenüberliegenden
Seite liegt.

Darüberhinaus ist bei den Ausführungsbeispielen nach den
Fig. 4 bis 6 die Rohrleitung auch in Z-Achsenrichtung, d.h.
in Richtung der Rohrlängsachse gestoppt. Hierzu sind auf
die Außenseite der Rohrleitung 3 radiale achsparallele
Flügel oder Nocken 7 aufgeschweißt, von denen sich je vier
auf beiden Seiten des Rahmens 4 befinden, von denen jeweils
vier an einem Metallring 8 angeschweißt sind. Die beiden
Metallringe 8 umgeben die Rohrleitung und liegen je zu
einer Seite des Rahmens jeweils an einer Rahmenstirnseite an.
Durch diese senkrechten Ringe 8 wird die Rohrleitung in
axialer Richtung gegenüber dem Rahmen 4 gehalten, wobei
sich die Rohrleitung weiterhin in positiver Y-Richtung und
in Drehrichtung um die Rohrlängsachse bewegen kann. Damit
der Rahmen 4 Kräfte in Z-Richtung aufnehmen kann, ist am
Rahmen parallel zur Z-Richtung außen ein Stab 5a angelenkt,
dessen anderes Ende über ein Gelenk 11 an einer Wand des
Gebäudes 6 befestigt ist.

- 21 -

Der Rahmen ist ein beliebig geformtes Stützteil, an dem mindestens zwei Stäbe an einer einzigen Anlenkstelle des Rahmens oder eines Festpunktes um dieselbe Achse drehbar gelagert sind. Dabei wird die Rohrleitung über Paß- und/oder Lagerstücke am Rahmen in Richtung der verschiedenen Raumachsen X, Y, Z und/oder der Drehrichtung um die Rohrachse gestoppt und/oder freibeweglich gelagert.

Der Rahmen kann dabei direkt mit einer Stelle an mindestens einem Festpunkt angelenkt sein. In Richtung der noch freien Bewegung wird er durch entsprechend angeordnete Stäbe (Struts) so gestützt, daß er als Festpunkt ein Gegenlager zum Rohr bildet. Ebenso kann der Rahmen an mindestens einer Stelle an einem zweiten Rahmen unbeweglich befestigt oder angelenkt sein. Rahmen können mehrere Lagerstellen (Öffnungen) zur Lagerung von Rohren aufweisen, sowie an ihrer Außenseite mit Rohr-Lagerstellen versehen sein.

Zur Begrenzung der Rohrleitungsbewegung im oder am Rahmen können auch Federn statt Paß- und/oder Lagerstücken angewandt werden, wobei diese statt eines Stabes (Struts) über eine kraftschlüssige Verbindung mittels Rohrschelle am Rohr und Rahmen oder einem Festpunkt angelenkt sein können. Darüber hinaus können zwischen Strut und Festpunkt oder zwischen Strut und Rahmen Federn angeordnet sein; ebenso ist es möglich, daß mindestens eine Anlenkstelle des Rahmens am übrigen Rahmen federnd befestigt ist.

Die Federn wirken immer in Stützkraftrichtung, wobei diese auf Zug und/oder Druck belastbar sein können. Nach einer Ausführungsform kann die Feder in einem Rohrrahmen gelagert sein, wobei sie in Richtung der Rohrachse zum Rahmen (Distanzhalter) beweglich in Stützkraftrichtung wirkt.

Bei allen Gelenkanschlüssen von Stäben (Struts), Rahmen (Distanzhaltern) und/oder Federn ist darauf zu achten, daß die Kraftwirkungslinie innerhalb der Stützfläche des Gelenklagers am Festpunkt verbleibt, da sonst unzulässige Momente an der Anschlußstelle auftreten können.

Fig. 7 zeigt ein Ausführungsbeispiel der Erfindung mit einem Rahmen 4 (Distanzhalter), der über die Gelenke 11i, 11d, 11k und 11m über die Stäbe (Struts) 5d, 5e, 5f, 5g, 5h, 5i, 5b und 5c,einen Festpunkt bildend, gehalten wird. Dabei sind die Stäbe 5d und 5e, 5f und 5g, 5i, 5b und 5c und 5c mit 5d jeweils an einer einzigen Anschlußstelle - am Rahmen 4 über die Gelenke 11i und 11d frei im Gelenk 11f und über das Gelenk 11h am Festpunkt der Decke 6 - um dieselbe Achse drehbar gelagert.

Der Stab 5e ist über das Gelenk 11g am Festpunkt "Decke" 6 angelenkt. Der Stab 5f ist über das Gelenk 11e an dem Rahmen 4b angelenkt. Der Stab 5g ist über das Gelenk 11p an dem Rahmen 4d und der Stab 5h über das Gelenk 11q an der Wand 6 (in Fig. 9 und 10) angelenkt, während der Stab 5i über das Gelenk 11f und und die Stäbe 5b und 5c angelenkt ist, die über das
Bauwerksteil 6a und Gelenk 11c sowie die Decke 6
und Gelenk 11h einen Teilfestpunkt in Gelenk 11f
bilden. Die Gelenke 11h und 11g sind an Platten 10
angeschweißt.

Die Rahmen 4b und 4d sind Festpunkte in Richtung der
Längsachse der beiden Stäbe 5f und 5g. Der Rahmen 4c
kann an dem Rahmen 4b und den Gelenkhälften 11n und
18 angelenkt sein.

Das Rohr 3 ist im Rahmen 4 von einer zweiteiligen
Rohrschelle 12 umgeben, an der Paß- und/oder Lagerstücke zur Begrenzung der Rohrbewegung angebracht
sind. Nocken 7, die auf dem Rohr 3 und an dem Ring 8
angeschweißt sind, stoppen das Rohr 3 in Richtung
seiner Längsachse (wie Fig. 4 und 5) dadurch, daß
der Ring 8 an dem Rahmen 4 gleitet und sich dort
abstützt. Der Rahmen 4d ist in Fig. 10 sichtbar gezeigt, ebenso die Versteifung 17.

Das in Fig. 8 gezeigte Ausführungsbeispiel unterscheidet sich von dem in Fig. 7 gezeigten dadurch, daß es
einen Schnitt nach F-F in Fig. 9 wie folgt darstellt.
Der quadratische Rahmen 4 umgibt rundum die Rohrleitung 3, und die Rohrleitung wird durch die beiden
seitlich angeordneten T-Profile 9 nicht nur in +- und
-Richtung der X-Achse gestoppt, sondern auch in
-Richtung der Y-Achse (d.h. nach unten). Hierzu ist
an der unteren Hälfte der Rohrschelle 12 ein T-Profil
angeschweißt, das auf dem inneren Boden des Rahmens 4 gleitend anliegt. Der Rahmen wird wiederum durch
Stäbe 5d, 5e, 5f, 5g, 5h und 5i in X-, Y- und
Z-Achsenrichtung gehalten. Darüber hinaus ist die
Rohrleitung 3 auch in Z-Achsenrichtung, d.h. in Richtung der Rohrlängsachse, gestoppt. Hierzu sind auf
die Außenseite der Rohrleitung 3 radiale achsparallele
Flügel oder Nocken 7 aufgeschweißt, von denen sich je
vier auf beiden Seiten des Rahmens 4 befinden, von
denen jeweils vier an einem Metallring 8 angeschweißt
sind. Die beiden Metallringe 8 umgeben die Rohrleitung und liegen je zu einer Seite des Rahmens jeweils
an einer Rahmenstirnseite an. Durch diese senkrechten
Ringe 8 wird die Rohrleitung in axialer Richtung gegenüber dem Rahmen 4 gehalten, wobei sich die Rohrleitung
weiterhin in positiver Y-Richtung und in Drehrichtung
um die Rohrlängsachse bewegen kann.

Damit der Rahmen 4 Kräfte in Z-Richtung aufnehmen
kann, sind am Rahmen parallel zur Z-Richtung außen
die Stäbe 5f, 5g und 5h angelenkt, deren andere Enden
über die Gelenke 11e, 11p und 11q an den Rahmen 4b
und 4d sowie an einer Wand des Gebäudes 6 befestigt
sind. Dabei halten die Stäbe 5h und 5i den Rahmen 4
nur in seiner Lage, wobei sie eine Verdrehung des Rahmens 4 über die Drehachse der Lager 11i und 11d verhindern.

Fig. 8a zeigt schematisch ein Beispiel der räumlichen
Anordnung von Stäben (Struts) nach Fig. 8 in einer
ersten Ebene. Dabei können die in Gelenk 11i gemeinsam gelagerten Stäbe 5d und 5e über den Verstellbereich V1 = 180$^{\circ}$ angeordnet werden, wobei sie einen Mindestabstand A1 von 30$^{\circ}$ aufweisen sollten.

Die beiden Stäbe 5f und 5g können durch Verdrehung des Gelenks 11d (quer zu dessen Stab-Drehachse) ebenfalls über den Verstellbereich V2 = 180$^{\circ}$ versetzt angeordnet werden. Das gleiche gilt für den Stab 5h und Gelenk 11k über den Verstellbereich V2a. Für den Stab 5i gilt ein Verstellbereich V1a = 180$^{\circ}$ als verdrehte Anordnungsmöglichkeit. Darüber hinaus kann das Gelenk 11i zusätzlich von der Mittellinie des Rahmens 4 in +- oder -Richtung der Raumachse Z verschoben angeordnet werden, wobei der Verstellbereich gleich bleibt. Das gleiche gilt sowohl für das Gelenk 11d und V2 als auch für Gelenk 11k und 11m in V2a und V1a. Das Rohr 3 wird dabei über die zweiteilige Rohrschelle 12 und daran mit Schrauben 13 befestigte T-Profile 9 in +/-Z und -Y-Richtung sowie über die Nocken 7 und den Ring 8 in X-Richtung der Raumachsen gestoppt.

Das Ausführungsbeispiel nach Fig. 8b unterscheidet sich von dem in Fig. 8a gezeigten im folgenden:

Der Rahmen 4 ist hier über die Y-Achse nach unten gesehen dargestellt. Dabei ergeben sich für alle Gelenke zusätzliche Verstellbereiche in einer zweiten Ebene. Das Gelenk 11i kann dabei in einem Vollkreis (360$^{\circ}$) um die Y-Achse des Verstellbereiches V1b wahlweise angeordnet werden. Dabei gilt für die Stäbe 5d und

0032392

- 26 -

5e sowie für den Abstand A1 das gleiche wie in Fig. 8a.

Das Gelenk 11d kann sowohl um die Z-Achse gedreht
werden als auch in +/-Richtung der X-Raumachse am
Rahmen 4 verschoben werden. Gleichzeitig können die
Stäbe 5f und 5g über den Verstellbereich $V2b = 180^o$
angeordnet werden, wobei der Abstand A2 mindestens
$30^o$ betragen sollte. Für das Gelenk 11k und den Stab
5h gilt Verstellbereich $V2c = 360^o$ und Verschiebung
in +/-Richtung der Z-Raumachse am Rahmen 4. Für Gelenk
11m und den Stab 5i gilt in dieser Ebene das gleiche
wie in Fig. 8a, jedoch im V1c entgegen der Drehrichtung des Gelenks 11m.

Fig. 9 zeigt das in Fig. 7 dargestellte Ausführungsbeispiel in einer Ansicht nach D-D mit dem Gelenk 11q,
das an der Platte 10 der Wand 6 angeschweißt ist.

Fig. 10 zeigt das Ausführungsbeispiel in Fig. 9 im
Schnitt E-E. Dabei sind die Rahmen 4b, 4c und 4d mit
einer Versteifung 17 gezeigt. Weiter wird gezeigt, daß
der Stab (Strut) 5g an dem Rahmen 4d über das Gelenk
11p und der Stab 5f an dem Rahmen 4b über das Gelenk
11e angelenkt ist.

Fig. 11 zeigt ein weiteres Ausführungsbeispiel, bei
dem der Rahmen 21 (Distanzhalter) direkt am Festpunkt
der Wand 40 angelenkt ist. Dabei ist die Gelenkhälfte
26b am Rahmen 21 und die Gelenkhälfte 26a an der Wandplatte 41 angeschweißt. Beide Gelenkhälften 26a und
26b sind auf einem Bolzen 42 gelagert, welcher mit Muttern 43 und einem Splint 44 abgesichert ist. Der Rahmen 21 ist über die Schweißnaht .21b mit einem zweiten Rahmen 22 fest verbunden. Beide Rahmen 21 und 22 (Distanzhalter) weisen Lagerstellen 26b, 26c und 28 auf, an denen Gelenke oder Gelenkhälften anderer Rahmen und/oder Stäbe (Struts) zur Abstützung angelenkt werden können. Ebenso können an diesen Lagerstellen Federn angelenkt werden. Da die Rahmen 21 und 22 nur in einer Richtung zum Festpunkt hin Kräfte aufnehmen können, müssen in Richtung der beiden anderen Raumachsen noch Abstützungen vorgenommen werden, bei denen mindestens zwei Stäbe (Struts) oder Rahmen an einer einzigen Anlenkstelle der Rahmen 21 oder 22 um dieselbe Achse drehbar gelagert sind.

Die beiden Öffnungen 27a und 27b dienen zur Lagerung der Rohre 23a und 23b. In der Öffnung 27a ist ein Rohr 39 befestigt, an dem Paß-/Lagerstücke 38 befestigt sind, an denen ein Rohr 46 anliegt oder gleitet, welches an dem Rohr 23a angeschweißt ist und dieses koaxial zur Rahmenlängsachse führt.

Der von einem Rohr-T-Stück gebildete Rahmen 22 stoppt das Rohr 23b in seiner Öffnung 27b so, daß dieses nur in Richtung seiner Längsachse und radial um diese drehbar freigelagert ist. Zu diesem Zweck sind auf dem Rohr 23b Rohrschalen 25 und daran Nocken 24 angeschweißt, die in der Öffnung 27b des Rahmens 22 anliegen und/oder gleiten. An dem Gelenk 26c ist ein Stab 21a (Strut) angelenkt, der über einen Bolzen 42 gelagert und mit

- 28 -

Muttern 43 sowie einem Splint 44 gesichert ist. Die
Platte 29 am Rahmen 21 dient zur Befestigung der Gelenkhälfte 21b.

Fig. 13 zeigt ein weiteres Ausführungsbeispiel der
Erfindung nach Fig. 12 und 13, jedoch mit schräger
Rohrlagerung in einer Öffnung 27 für das Rohr 23 und
einer zweiten Öffnung 27a zur Lagerung mindestens eines
weiteren Rohres 23a im gleichen Rahmen 21. Weiter unterscheidet sich dieses Beispiel zu Fig. 11 und 12 dadurch, daß die Lagerung des Rahmens 21 über Gelenk 26d
an einer Lagerstelle 28 erfolgt, ebenso wie die beiden
Stäbe 21a (Struts), und daß diese Stäbe 21a über Formteile 45 am Rahmen 21 mit Bolzen 42, Muttern 43 und
Splint 44 gelagert sind.

Fig. 15 zeigt ein Ausführungsbeispiel der Erfindung
mit zwei Öffnungen 27 und 27c im Rahmen 21 (Distanzhalter), der mit Lagerstellen 28 versehen ist und in
Öffnung 27 ein Rohr 23 derart stoppt, daß dieses sich
nur axial und radial frei bewegen kann. Nocken 24 am
Rohr 23 angeschweißt stützen das Rohr 23 in einem
Lagerstück 39, wo sie anliegen und/oder gleiten.

Fig. 17 zeigt ein Ausführungsbeispiel, bei dem der Rahmen 21 (Distanzhalter) von zwei versetzt angeordneten
zweiteiligen Rohrschellen 12 und daran angelenkten
Stäben 21a unbeweglich gehalten wird, wobei die Rohrschellenhälften 12 jeweils an ihrer Anlagefläche 48
zusammen verschweißt (geheftet) sind. Das Rohr 23 wird
dabei so geführt, daß es sich in dem Rahmen 21 (Distanzhalter) nur axial und radial frei bewegen kann.

Die Stäbe 21a (Struts) sind zwischen den  - den Rahmen
21 haltenden -  Rohrschellen 12 auf einem Bolzen 42
gelagert und durch Muttern 43 sowie einen Splint 44
abgesichert. In diesem Beispiel sind zweimal je zwei
Stäbe an einer einzigen Anlenkstelle des Rahmens 21
um dieselbe Achse drehbar gelagert.

Fig. 18 zeigt eine Seitenansicht der Darstellung in
Fig. 17, wo die Verbindungsstelle 48 der beiden Rohrschellen 12 und der Rahmen 21 (Distanzhalter) sichtbarer
dargestellt sind.

Fig. 19 zeigt ein Ausführungsbeispiel mit einer Lagerstelle 37 für ein Rohr 23c an der Außenseite des Rahmens 21 (Distanzhalters), der in diesem Beispiel durch
ein Doppel-T-Profil gebildet wird. Die Öffnung 27a
dient zur Lagerung eines Rohres 23a mit freier Bewegung innerhalb der Öffnung 27a. In Öffnung 27b ist das
Rohr 23b, auf dem ein Ring 46 (Rohr) aufgeschweißt ist,
gestoppt.

Das Rohr 23c wird an der Außenseite des Rahmens 21
(Distanzhalters) in der Lagerstelle 37 in Richtung der
Längsachse des Rahmens 21 über einen am Rohr 23c angeschweißten Nocken 49 gestoppt.

Über die Lagerstellen 26e, 26f und 28 wird der Rahmen
21 durch Stäbe und/oder weitere Rahmen (Distanzhalter)
unbeweglich befestigt. An den Gelenken 26f sind jeweils zwei Stäbe 21 über dieselbe Achse drehbar gelagert.

Fig. 22 zeigt ein Ausführungsbeispiel der Erfindung
mit federnd gelagertem Rahmen 22 (Distanzhalter), der
über eine Platte 31 gegen eine Feder 32 anliegt, die
in einem Rohr 21c gehalten wird, an dem ein weiteres
Rohr 33 angeschraubt ist, welches über einen Ring 30
die Bewegung des Rahmens 22 (Distanzhalters) gegen
einen daran befestigten Ring 47 begrenzt. Die Platte
29 dient als Gegenlager der Feder 32 und zur Befestigung der Lagerstellen 26, an denen Stäbe (Struts),
weitere Rahmen (Distanzhalter) und/oder Federn so angelenkt werden, daß über den Rahmen 22 und/oder 21c die
Stützkräfte abgeleitet werden können.

Fig. 24 zeigt ein Ausführungsbeispiel der Erfindung,
den Festpunkt-Stab-Anschluß betreffend, wobei Stäbe,
Federn und/oder Rahmen (Distanzhalter) so angeordnet
sind, daß sie nur im Verstellbereich Va an Lagerstelle
28a über die Gelenkhälfte 26h ins Bauwerk 36 bis max.
zum Lagerquerschnittsendpunkt 34a Kräfte ab- bzw. einleiten.

An den Lagerstellen 28 besteht keine Begrenzung der
Kraftab- bzw. -einleitung. In 28b wird die Stützkraftab- bzw. -einleitung durch Anordnung der Stäbe, Federn
oder Rahmen (Distanzhalter) jedoch wieder durch den
Verstellbereich Vb innerhalb der Querschnittsendpunkte 34a und 34b begrenzt, ebenso an den Lagerstellen 28c und 28d, wo die Begrenzung Vc und Vd durch
die Querschnittsendpunkte 34c und 34d erfolgt. Die Gelenkhälften 26h und 26i sind je über eine Platte 35
am Bauwerk 36 befestigt.

Alle in den Ausführungsbeispielen beschriebenen Teile sind Fertigteile, die je nach Anzahl der zu stoppenden Richtungen eingesetzt werden.

In den Ausführungsbeispielen nach den Figuren 26 bis 49 wird das zu stützende Teil 3a, das z.B. ein Rohr, ein Behälter, eine Wand, eine Decke, eine Bühne, ein Träger, eine Maschine oder eine sonstige Vorrichtung sein kann, durch Lastübertragungsteile 5, 55, 57, 60 gehalten, wobei keines dieser in sich starren Lastübertragungsteile mit seinen beiden Enden direkt zwischen dem Bauwerk oder der Anlage und dem zu unterstützenden Teil befestigt ist, sondern am einen oder anderen Ende ein weiteres Teil dazwischengeschaltet ist, so daß eines der beiden Enden des Lastübertragungsteils an einer weiteren Gelenkstelle 50, 52, 53, 54 oder 61 befestigt ist, die sich zwischen dem Bauwerk oder der Anlage und dem zu stützenden Teil befindet. Hierdurch besteht eine Gelenkkette, die Bewegungen des Bauwerks und/oder des zu stützenden Teils abfängt.

Das Ausführungsbeispiel nach Fig. 26 zeigt schematisch eine Vorderansicht eines Gebäudes in einem Ausschnitt, in dem ein Rohr oder Behälter 3a mit seiner Längsachse senkrecht durch vier Stützvorrichtungen befestigt ist. In Fig. 26 sind zwar nur zwei Stützvorrichtungen gezeigt, aber dahinter liegen zwei weitere parallele Stützvorrichtungen, wie aus Fig. 27 ersichtlich. Um eine sichere Befestigung des Teils 3a zu erhalten, müssen wenigstens zwei Stützvorrichtungen angeordnet sein, die zum Teil 3a einander gegenüberliegen. Jede

- 32 -

dieser Stützvorrichtungen weist drei Lastübertragungsteile 5 auf, die aus Stäben (Struts) oder starren
Flächenelementen bestehen, die an beiden Enden Gelenke
tragen und von denen zwei am Bauwerk und ein Lastübertragungsteil an der zu stützenden Vorrichtung in
Gelenkstellen 11 angelenkt sind. Die drei übrigen
freien Enden sind aneinander gelenkt in einer weiteren Gelenkstelle 50, die weder am Bauwerk bzw. an
einer Anlage noch an dem zu stützenden Teil direkt befestigt ist, sondern zwischen dem Bauwerk bzw. der
Anlage und dem zu stützenden Teil bzw. deren Gelenkstellen liegt. Die Lastübertragungsteile 5 und die
Gelenkstellen 11, 50 liegen zumindest bei einer Stützvorrichtung, vorteilhafterweise aber auch bei zwei
einander diametral gegenüberliegenden Stützvorrichtungen, in einer einzigen Ebene, in der auch die Hauptverschieberichtung des zu stützenden Teils liegt. Deshalb liegt auch die Längsachse des zu stützenden Teils
in dieser Ebene, da bei einem Rohr oder einem Behälter
3a die Hauptbewegungsrichtung aufgrund einer Wärmeausdehnung in Richtung der Längsachse liegt. Die Längsachsen bzw. die Kraftübertragungsrichtungen der Lastübertragungsteile 5 stehen zueinander in einem Winkel
von $<$ oder $>$ 180$^{\circ}$, d.h. sie fluchten nicht miteinander,
so daß ein Druck oder Zug in Richtung der Längsachse
eines Lastübertragungsteils 5 zu einem Auslenken bzw.
Verschwenken der beiden anderen Lastübertragungsteile
führt. Am Rohr oder Behälter 3a sind Anschlüsse A angeordnet, an denen weitere Rohrleitungen befestigt werden
können.

Bei einer Verschiebung V in X-, Y- und/oder Z-Richtung aufgrund von Thermik oder Seismik S wird mindestens
eine der am Bauwerk (oder einer Anlage) befestigten
Gelenkstellen 11 bewegt. Eine Bewegung einer dieser
äußeren Gelenkstellen 11 führt dazu, daß das direkt
mit dieser Gelenkstelle verbundene Lastübertragungsteil um die Gelenkstelle 50 verschwenkt wird, so daß
schon allein hierdurch ein Teil der Verschiebung aufgehoben wird. Ferner wird die Gelenkstelle 50 verschoben, wodurch wiederum die Gelenkstelle 50 bewegt wird
und ein Verschwenken der beiden anderen Lastübertragungsteile 5 erzeugt. Hierdurch wird über das am Teil
3a angelenkte Lastübertragungsteil das Teil 3a bewegt,
da aber diese Bewegung erheblich geringer ist als die
ursprüngliche Bewegung des Bauwerks, und ferner durch
die gegenüberliegende zweite Stützvorrichtung teilweise abgefangen wird, wird eine Beschädigung des
Teils 3a verhindert. Dabei ist von Bedeutung, daß aufgrund der klappsymmetrischen Anordnung der beiden Stützvorrichtungen zur Längsachse des zu stützenden Teils
3a auf das zu stützende Teil keine Momente ausgeübt
werden, sondern das zu stützende Teil senkrecht bleibt
und nur geringfügig parallel verschoben wird. Dabei
kann zusätzlich eine Verschiebung des zu stützenden
Teils in Längsrichtung erfolgen, wobei die Richtung
dieser Verschiebung vorherbestimmbar ist, indem dafür
gesorgt wird, daß die Gelenkstellen 50 höher oder niedriger als die am Teil 3a befestigte Gelenkstelle 11
ist. Liegt die Gelenkstelle 50 höher als diese Gelenkstelle 11, so wird das Teil 3a nach unten bewegt, und
bei einer Anordnung der Gelenkstelle 50 niedriger als
die am Teil 3a befestigte Gelenkstelle 11 wird das

- 34 -

Teil 3a nach oben bewegt, wenn eine der am Gebäude befestigten Gelenkstellen raumeinwärts bewegt wird. Bei
einer Bewegung raumauswärts sind die Richtungen umgekehrt.

Wie in Fig. 27 gezeigt, können die Gelenkstellen Pendellager sein, die ein Verschwenken quer zur eigentlichen
Drehrichtung in einem Winkel von $\alpha$ zu beiden Seiten
erlauben. Vorzugsweise wird $\alpha$ = 5$^{\circ}$ gewählt. Hierdurch wird ein Ausschwenken der Lastübertragungsteile
und ein Bewegen des zu stützenden Teils 3a in Z-Richtung ermöglicht. Die doppelte Anordnung zweier zueinander paralleler Stützvorrichtungen auf jeder Seite des
Teils 3a einander gegenüberliegend und mit den gegenüberliegenden fluchtend sorgt dafür, daß bei einer Bewegung des Teils 3a in Z-Richtung es seine parallele Lage
beibehält. Die Stützvorrichtung bildet somit in zweifacher Weise eine Parallelführung. Die Gelenkstellen
11 können, wie in Fig. 26 unten längsgestrichelt gezeigt, in Langlöchern 11a der Stützteile einliegen,
wodurch eine weitere Bewegungsmöglichkeit der Lastübertragungsteile und damit des zu stützenden Teils 3a
erreicht wird.

Das Ausführungsbeispiel nach Fig. 28 und 29 unterscheidet sich von dem nach den Figuren 26 und 27 im wesentlichen nur dadurch, daß das von der weiteren Gelenkstelle 50 ausgehende und zum Teil 3a führende Lastübertragungsteil 5 nicht direkt am Teil 3a angelenkt
ist, sondern an einer zweiten weiteren Gelenkstelle 52,
an der wiederum drei Lastübertragungsteile 5 angelenkt sind, von denen zwei Lastübertragungsteile 55 mit ihren anderen Enden am Teil 3a angelenkt sind. Alle Lastübertragungsteile liegen wiederum in einer einzigen Ebene, und die Teile 55 schließen auf der dem Teil 3a zugewandten Seite einen Winkel von $90°$ und $180°$ ein. Hierdurch liegt die weitere Gelenkstelle 52 zwischen den am Teil 3a angeordneten Gelenkstellen 11. Je nachdem, in welchem Abstand die Gelenkstelle 52 zu den beiden am Teil 3a angeordneten Gelenkstellen 11 liegt, führt eine Ausdehnung des Teiles 3a in Längsrichtung zu einer Bewegung dieses Teils nach unten oder oben. Damit ist eine Bewegung des Teils 3a aufgrund einer Wärmeausdehnung vorherbestimmbar. Wie in Fig. 29 zu sehen, sind an dem Teil 3a drei Stützvorrichtungen um die Längsachse des Teils 3a drehsymmetrisch angeordnet, wobei die Stützvorrichtungen jeweils mit der benachbarten einen Winkel von $120°$ einschließen.

Das Ausführungsbeispiel nach den Figuren 30 und 31 unterscheidet sich von dem nach den Figuren 28 und 29 dadurch, daß anstelle der weiteren Gelenkstellen 50 und 52 starre, flächenförmige Teile angeordnet sind, an denen die stabförmigen Lastübertragungsteile 5 in den Ecken angelenkt sind und von denen das Teil 60 aus einer Platte und das Teil 57 aus drei aneinander angelenkten Stäben besteht. Hierdurch werden die weiteren Gelenkstellen 50 und 52 in jeweils drei Gelenkstellen 54 bzw. 61 aufgelöst (aufgeteilt), wodurch diese Teile 57 und 60 zusätzlich zu den Lastübertragungsteilen 5 verschwenken können und damit auch Bewegungen aufnehmen. Die äußeren oberen dreieckförmigen Teile 57 und
60 sind mit dem Gebäude durch drei Lastübertragungsteile 5 verbunden, um eine feste Lage dieser Teile
zu erreichen. Wie aus Fig. 31 ersichtlich, sind zwei
Stützvorrichtungen diametral gegenüberliegend angeordnet, und eine dritte Stützvorrichtung zu diesen zwei
ersten rechtwinklig, wobei, wie auch bei allen anderen
Ausführungsbeispielen, die Stützvorrichtungen einschließlich ihrer Lastübertragungsteile in senkrechten
Ebenen liegen, die durch die Längsachse des Teils 3a
verlaufen oder dazu parallel verschoben sind.

Die Figuren 32 bis 39 zeigen Stützvorrichtungen separat
dargestellt von Bauwerken und zu stützenden Teilen 3a,
wobei die äußeren Anlenkstellen entweder an einem Gebäude oder an einem Teil 3a befestigt sein können. Das
Ausführungsbeispiel nach Fig. 32 und 34 zeigt eine
Stützvorrichtung ähnlich denen in Fig. 26 und 27. Die
Ausführungsbeispiele nach Fig. 33, 35, 36 und 38 entsprechen etwa denen nach Fig. 30 und 31, wobei aber
jeweils eines der dreieckförmigen Lastübertragungsteile
fehlt. Das Ausführungsbeispiel nach Fig. 37 zeigt einen
durch stabförmige Lastübertragungsteile 5 und dreieckförmige Flächengebilde 57 abgestützten Behälter 3a, wobei die untersten Stäbe 5 sich auf einem Festpunkt 51
abstützen, der mittig unterhalb des Behälters liegt.
Dieser Festpunkt 51 wird durch mehrere Stäbe 5 am
Boden eines Gebäudes oder einer Anlage gehalten.

Die Figuren 40 und 41 zeigen eine Bauwerksstütze 6b,
die von einem Rahmen 4 umgeben ist, der gegenüber der Stütze zumindest in einer Richtung beweglich gelagert ist und an dem stabförmige Lastübertragungsteile 5 angelenkt sind, die zum Bauwerk und zu einem zweiten Rahmen 4 führen, in dem ein zu stützendes Teil, insbesondere ein Rohr, in mindestens einer Bewegungsrichtung freibeweglich gelagert ist.

Das Ausführungsbeispiel nach den Figuren 42 und 42 unterscheidet sich von dem nach den Figuren 40 und 41 nur dadurch, daß der um die Stütze 6b befindliche Rahmen 4a nur teilweise ausgeführt ist und an diesem drehbar gelagert ist. Um das zu stützende Teil 3a, insbesondere um ein Rohr, sind zwei Rahmen ineinander angeordnet, die zueinander und zum Teil 3a kardanisch gelagert sind. Durch diese kardanische Aufhängung des Teiles 3a werden Drehbewegungen in verschiedenen Richtungen aufgenommen.

Das Ausführungsbeispiel nach den Figuren 44 und 45 zeigt einen behälterförmigen Rahmen 4b, der von einem weiteren Rahmen 4 umgeben ist, an dem die Lastübertragungsteile 5 angelenkt sind, die über weitere Teile zum Bauwerk oder zu einer Anlage führen. Im behälterförmigen Rahmen 4b sind nicht gezeigte, zu stützende Teile insbesondere beweglich gelagert. Lastübertragungsteile 5 lagern den Rahmen 4 zusätzlich an kardanisch aufgehängten Rahmen 4, die mittig ein zu stützendes Teil, insbesondere ein Rohr 3a, tragen. Von dem äußeren Rahmen 4 dieser zuletzt genannten Rahmen geht wiederum ein Lastübertragungsteil 5 von einer Anlenkstelle 11 aus, das an einer Stütze 6b angelenkt ist.

In den Figuren 46 und 47 ist ein Rahmen 4 dargestellt, der Unterteilungen aufweist und in dem Gruppen von Rohren 3a gelagert sind. Ferner ist ein Rohr 3a durch eine federnde oder hydraulische bzw. pneumatische Stoßbremse 63 gelagert, als auch ein Rohr 3a durch eine Federabstützung 65. Der Rahmen 4 ist wiederum durch insbesondere stabförmige Lastübertragungsteile 5 angelenkt gehalten.

Die Figuren 48 und 49 zeigen,zwei verschiedene Arten waagerechter Bühnen oder Böden an einem Bauwerk durch stabförmige Lastübertragungsteile 5 entsprechend der Erfindung zu lagern. Hier sind ähnliche Konstruktionsanordnungen gewählt wie in den vorherigen Figuren gezeigt.

In dem Ausführungsbeispiel nach den Figuren 50 bis 52 ist ein zu stützendes Teil innerhalb eines Rahmens 4 gelagert, der außen an drei Seiten je eine Anlenkstelle 11 aufweist, wobei von zwei dieser Anlenkstellen je zwei stabförmige Lastübertragungsteile ausgehen, deren andere Enden am Bauwerk oder an einem Anlenkteil angelenkt sind. Von einer dritten Anlenkstelle geht nur ein stabförmiges Lastübertragungsteil 5 aus. Dabei liegen die Lastübertragungsteile einer Anlenkstelle in einer Ebene, die senkrecht ist zu einer Ebene, in der die Lastübertragungsteile der zweiten Anlenkstelle liegen. Hierbei können wiederum die Ebenen durch die Längsachse des Teils 3a verlaufen und einzelne Lastübertragungsteil 5 in einer der beiden Ebenen liegen.

In Fig. 53 ist dargestellt, daß die Kraftflußrichtungen E bei einer Stützvorrichtung ähnlich Fig. 26 durch
die Stützflächen der Anlenkstellen verlaufen. Fig. 54
und 55 zeigen drei ineinander kardanisch gelagerte
Rahmen 4, von denen der innerste Rahmen ein zu stützendes Teil 3a, insbesondere ein Rohr, rechtwinklig
zur Seitenfläche dieses Rahmens trägt. Durch am Rohr
befestigte Ringe 8a wird das Teil 3a unverschieblich
oder begrenzt verschieblich im innersten Rahmen 4 gehalten.

Bei allen oder einigen der Ausführungsbeispiele ist
von besonderer Bedeutung und wird folgendes beansprucht:

Die flächigen Stützeinheiten sind untereinander und/oder
über Bauteile bzw. Anlagenteile zu räumlichen Stützeinheiten ausgebildet und verbunden. Die flächigen
Stützvorrichtungen werden nicht durch die Resonanzfrequenz eines auf sie einwirkenden Erregers erregt,
so daß sie diese Frequenz auch nicht auf andere Teile
übertragen können. Die Stützvorrichtungen werden zur
Auslenkung der Lastfälle nicht durch eine Mechanik
oder andere Antriebsmethoden angetrieben, sondern
folgen nur der Bewegung ihrer quasi festen Anlenkpunkte. Den Stützvorrichtungen sind zwar der Bewegungsfreiraum, nicht aber die zeitlich-geometrischen
Abläufe darin, vorgegeben.

Die Stützvorrichtungen sind nur für eine Kraft-Last-
Ableitung ausgelegt, da sie darüber hinaus allen
Kräften ausweichen.

Die Stützvorrichtungen werden von auf die Abstützung zwängend ausgerichteten Kräften und/oder Bewegungen zum Zwecke der nichtzwängenden Auslenkung selbiger gesteuert und stellen so ausweichend starre Widerlager dar. Ein über Lastübertragungsteile angelenktes Teil 3, 3a, 4, 4a, 4b, 6, 6a bis 6e wird bei Bewegung eines Abstützpunktes 11 achsparallel gestützt bewegt, wobei die Lastübertragungsteile auslenken.

Ein mit fünf Lastübertragungsteilen angelenktes unterstütztes Teil wird in sechs Freiheitsgraden dann unbeweglich gehalten, wenn keine der Bewegung der Abstützpunkte folgende Verschiebung ausgelenkt wird. Der Bewegung der Abstützpunkte folgend erfolgt auch dann eine Auslenkung dieser Verschiebung, wenn ein angelenktes Teil über Lastübertragungsteile in sechs Freiheitsgraden unbeweglich gehalten ist. Ein über Lastübertragungsteile 5 angelenktes Teil wird bei der Auslenkung von Verschiebungen nicht über den Radius eines Lastübertragungsteils aus seiner achsparallelen Lage gezwungen.

Hierdurch wird ein Verfahren zur strukturmechanischkompensierenden bzw. auslenkenden Lastfallisolierung-Abstützung ermöglicht. Die elastisch gestützte Konstruktion zur Abstützung weist momentfrei auslenkende Lastübertragungsteile bzw. Stäbe auf, die über an beiden Enden angeordnete Gelenke, insbesondere zwischen Bauwerksteilen und Anlagenkomponenten zum Zwecke des Bewegungsausgleiches und/oder der Lastableitung befestigt sind.

Die Anlagenkomponenten 1, 1a sind nicht direkt mit.
dem Bauwerksteil 6, 6a bis 6e starr verbunden, sondern
die Anlagenkomponenten sind über dazwischen der dortigen strukturmechanisch vorliegender Lastfälle entsprechend mit Stäben 5, die zu flächigen momentfrei kompensierenden bzw. ausgleichenden angelenkten - über die
gesamte Bewegungsdistanz abgestützten - Stabeinheiten ausgebildet und so gelagert, daß dabei die Stützlast der Komponente 1 und 1a - dem Lastfall K entsprechend - von den übrigen Lastfällen "V" = Verschiebung
und/oder "S" = Seismik des Bauwerkes 6, 6a bis 6e
isoliert und abgeleitet werden kann, ohne daß dadurch
zusätzliche Kräfte erzeugt werden. Anschlußkräfte und/
oder Verschiebungen werden aus an die Anlagenkomponente 1 und 1a z.B. dort an die Stutzen anschließender
Systeme "A" in die strukturmechanische Lastfallbetrachtung einbezogen und über den Lastfall "K" der
Anlagenkomponente hinaus bei der Ausbildung flächig
gestützter Stabeinheiten so berücksichtigt, daß eine
demgemäße Stutzenentlastung und/oder Abstützung der
Anlagenkomponente 1 und 1a an den Bauwerksteilen 6,
6a bis 6e erfolgt, wobei die instabile-ausweichende
Reaktion der Stabeinheiten auf Querkräfte über den
Stützradius "R" so um ca. $\pm 5^{\circ}$ auslenkender Stäbe 5
genutzt wird.

Die Verschiebung der Anlagenkomponente 1, 1a wird durch
die Gegenlenkung so zu flächig gestützten Stabeinheiten angeordneter Stäbe 5 von der Lage der Anschlußpunkte 11 an der Anlagenkomponente 1 und 1a der Länge
und den Winkeln der Stäbe 5, 55, 57 untereinander, der
Lage der Bauwerksanschlußpunkte 11 und der symmetrischen und/oder asymmetrischen Systemgeometrie der flächig
gestützten Stabeinheiten zueinander abhängig geregelt.
Die Bauwerksanschlüsse 11 können untereinander verschiedene Lastfälle aufweisen, die je für sich analysiert und dann in gemeinsamer Abhängigkeit über
flächig gestützte Stabeinheiten und/oder Teil-Stabeinheiten durch Gelenkknotenpunkte 52 von der Anlagenkomponenten-Strukturmechanik getrennt zu einer strukturmechanisch kompensierenden bzw. auslenkenden Einheit verknüpft werden.

Die Stabilisierung der Anlagenkomponenten über ihre
Längsachse "Y" und/oder Verdrehung sowie um die Querachsen "X" und "Z" wird durch die Symmetrie und Anzahl
der bei einer flächig gestützten Stabeinheit über den
Umfang verteilte Anschlußpunkte 11, die Winkel und
Längen der bis zu einem Gelenkknotenpunkt 50 daran
angelenkter Stäbe 5 oder 55 geregelt. Die Stabilisierung der Lage und/oder Verschiebung der Anlagenkomponente im Raum wird durch die Strukturmechanik, Symmetrie, Anzahl und Richtung der an ihrem Umfang angelenkten flächig gestützten Stabeinheiten geregelt.

Die Wärmeausdehnung der Anlagenkomponente über ihre
Achsen "X", "Y" und "Z" wird durch symmetrisch sich
jeweils auf gleicher Höhe oder Außenkreis gegenüberliegende Anschlußpunkte 11 sowie die Länge und Winkelstellung daran anschließender Stäbe 55 und/oder 5
bis zu einem Gelenkknotenpunkt 50 geregelt. Die Stabilisierung der "X", "Y" und "Z"-Anlagenkomponenten-
achsen wird durch mehrere zwischen der Anlagenkomponente
1 und 1a und Bauwerksteilen 6, 6a bis 6e parallel in gleicher Richtung nebeneinander und/oder über den
Komponentenumfang verteilt angeordneter flächig gestützter Stabeinheiten mit lastfallgemäßer Strukturmechanik geregelt.

Die Lage der Anlagenkomponenten und/oder der Bauwerksteile über die jeweilige zwischen ihnen angeordnete
flächig gestützte Stabeinheit wird dadurch stabilisiert, daß mehrere in ihr symmetrisch, parallel nebeneinander gleich gelagerte Stäbe 5 und/oder 55 angeordnet sind. Bei einer flächig gestützten Stabeinheit wird
der Trennpunkt zwischen dem inneren und dem äußeren
Lastfall jeweils durch den Gelenkpunkt dargestellt, an
dem gleichzeitig eine innere und äußere Verschiebung
entsprechend dem Winkel zwischen den Stäben 5 erfolgt.

Zur strukturmechanischen Kompensierung und/oder Auslenkung können flächig gestützte Stabeinheiten auch
mit starren Gelenkknotenpunkten 60, 54 ausgebildet werden, die durch ihre Geometrie der an ihren angelenkten
Stäben 5 oder 55 und/oder durch entsprechende geometrische Öffnungen 6b die kinematische Funktion der flächig
gestützten Stabeinheiten zwischen der Anlagenkomponente
1 und 1a und den Bauwerksteilen 6, 6a bis 6e beeinflussen und lastfallgemäß in logischer Abhängigkeit zu
dem übrigen Stabsystem regeln. Die starren Gelenkknotenpunkte 60 können auch aus mehreren parallel zueinander,
der Funktion entsprechend verschieden ausgebildeten
Teilen 61 mit verschiedenen Öffnungen 67 bestehen und
an mehreren Punkten zwischen einer flächig gestützten

Stabeinheit angeordnet sein. Räumlich gestützte starre Gelenkknotenpunkte 51 der Lastfall-Strukturmechanik sind entsprechend ausgebildet und können in oder statt einer flächig gestützten Stabeinheit zwischen der Anlagenkomponente 1 und 1a und dem Bauwerksteil 6, 6a bis 6e angeordnet werden, wo sie über die Stäbe 5 sowie die Anlenkpunkte 51 und 51a angelenkt sind. Statt der starren Gelenkknotenpunkte 51 und/oder 60, 54 können auch Rahmen 4, 4a, 4b oder Rahmenteil 8a zur Erfüllung der strukturmechanischen Aufgabe ausgebildet und angeordnet werden.

Die Anschlußpunkte 5 oder 55 der Anlagenkomponente 1, 1a können an einem oder mehreren diese zur lastfallgemäßen Lagerung umgebenden Rahmen 4 angeordnet sein, wobei der oder die Rahmen 4 Führungslager und/oder Paßteile 9a, 9b aufweisen kann und zur Aufnahme mehrerer Anlagenkomponenten 1, 1a sowie zur Lagerung von einer oder mehreren Anschlußkomponenten 1, 1a dienen kann. Die Anlagenkomponenten 1, 1a können untereinander und/oder über die Rahmen 4 direkt angelenkt sein. Auch die Bauwerksteile 6, 6a bis 6e sind mit Rahmen 4, 4b oder Rahmenteilen 4a umgeben und sind über Stäbe 5 starre Knotenpunkte 51, 54, 60, weitere Rahmen 4, 4b, Rahmenteile 4a oder direkt mit der Komponente 1 oder 1a angelenkt gelagert. Die Stützkraft - die immer durch die Ausrichtung der Stablängsachse der Stäbe 5, 55, 57, 58, 59 angezeigt wird - verläuft an den Anschlußpunkten 11 immer innerhalb der Lagerstützfläche, um Anschlußmomente zu vermeiden.

Die Stäbe 5, 55, 57, 58, 59 werden von Röhren gebildet, die über gegenläufige Gewinde an beiden Enden mit Kontermuttern gesichert, stufenlos längenverstellbar und jederzeit nachjustierbar so für bestimmte Kraftübertragungsfälle zuvor konstruiert und statisch belegt sind. Mindestens zwei Stäbe 5, 55, 57, 58, 59 sind an einer einzigen Anlenkstelle 11, 53, 54 oder 61 um dieselbe Achse drehbar gelagert, wobei dort Meß- 11, Blockier- 12, Signal- 13 und/oder Regel-Einrichtungen 14 angeordnet sein können, die Steuer-, Analyse- und/oder Überwachungs-Funktionen erfüllen. Statt der Stäbe 5, 55, 57, 58, 59 der starren Knotenpunkte 51, 54, 60 und/oder Rahmen bzw. Rahmenteile 4, 4a, 4b können auch Federn 32, 65 oder so federnd ausgebildete Teile 63 angeordnet sein, mit denen dann neben der strukturmechanisch kompensierenden auslenkenden Funktion auch eine lastabhängige Steuerung bzw. Regelung der verschiedenen Lastfälle möglich ist. Statt der Stäbe 5, 55, 57, 58, 59 können auch Federhänger 65, Stoßbremsen 63, Kompensatoren, Seile und/oder andere stabförmige Bauteile, die in mindestens einer Richtung ihrer Längsachse stabil sind, für bestimmte, in der instabilen Richtung nicht beanspruchende Funktionen angeordnet sein. Die gemäß dem Verfahren strukturmechanisch und/oder lastfallabhängig kompensiert bzw. ausgelenkten Bewegungen zur Gegensteuerung anderer Lastfälle und/oder als quasi Antriebsenergie werden nach dem gleichen Verfahren genutzt. Die Anlagenkomponenten und/oder die Bauwerksteile können beliebige Formen aufweisen, wobei sie über diese Distanz mit einer oder mehreren aneinandergereiht, getrennt, auch versetzt angeordneten stabilen Stabeinheiten,
die untereinander eine logische Verknüpfung aufweisen,
in verschiedenen Richtungen und/oder Lastfällen zur
Lastfallisolierung bzw. Abstützung versehen sind.
Durch die strukturmechanisch kompensierende auslenkende Abstützung werden sich selbst über die Lastfälle
regelnde Systeme geschaffen, deren Beeinflussung
direkt und/oder über entsprechende Einrichtungen 11
bis 14 jederzeit möglich ist.

Durch die strukturmechanisch kompensierende bzw. auslenkende Abstützung werden Reibungen der Komponenten
weitgehendst vermieden. Die Anlagenkomponenten 1 und
1a sind in Behältern 46 beliebig gelagert, wobei die
flächig gestützten Stabeinheiten zwischen den Behältern
4b und dem Bauwerk 6, 6a bis 6e an denselbigen angelenkt sind. Die flächig gestützten Stabeinheiten sind
nicht nur indirekt über Rahmen 4 oder Rahmenteile 4a,
4b und/oder die Komponenten 1 und 1a sowie das Bauwerk
6, 6a bis 6e untereinander verbunden, sondern auch
direkt und/oder über angelenkte Stäbe 5 untereinander
verbunden. Die Anschlußpunkte 11 sowie die Gelenkknotenpunkte 50, 51, 53, 54, 60 können auch entsprechende, mehrere flächige und/oder kugelförmige Gleitelemente sein und/oder solche, an welchen flächige
oder anders ausgebildete Bauteile die Stäbe 5, 55,
57, 58, 59 ersetzen.

Die flächig gestützten Stabeinheiten, die Anlagenkomponenten und/oder die Bauwerksteile und Rahmen
können in jeder der Raumachsen "X", "Y" und "Z" sowie in den dazwischen liegenden Bereichen beliebig angeordnet sein. Die Anlagenkomponenten sowie die Bauwerksteile können aus verschiedenen Systemen oder
Systemteilen bestehen, deren einzelne Lastfälle je
für sich und/oder in einem resultierenden Lastfall
abgestützt sind. Beliebig viele Komponenten können
über die resultierende - strukturmechanisch kompensierende bzw. auslenkende lastfallisolierende Abstützung - an einem einzigen Bauwerksteil 6, 6a bis
6e gemeinsam abgestützt sein, wobei die Stützlasten
einer oder mehrerer einzelner Anlagenkomponenten
zur Abstützung der restlichen Anlagenkomponenten so
kompensiert bzw. ausgelenkt werden. Die Stützlast
einer Anlagenkomponente wird auf eine beliebige Anzahl
und/oder Anordnung von Bauwerksteilen eingeleitet.

Die Stützlasten mehrerer Anlagenkomponenten werden
gegeneinander kompensiert bzw. ausgelenkt. Verfahrensbedingte Betriebsbedingungen und/oder Erfordernisse,
etwa Behälterbeschickungen, werden über die strukturmechanisch kompensierende bzw. auslenkende Abstützung
lastfallabhängig geregelt. Im Stör- bzw. Schadensfall ist über die Abstützung durch die Einrichtungen
11, 12, 13 und/oder 14 eine sichere und unmittelbare
Abschaltung der Gesamtanlage oder bestimmter Teilbereiche möglich. Gemäß dem Verfahren kann keine das
Bauwerk noch erhaltende "Einwirkung von außen" die
inneren Systeme mehr als dies zulässig und berücksichtigt ist, zusätzlich belasten oder gar zerstören. Durch
die strukturmechanisch kompensierende bzw. auslenkende
Abstützung wird eine optimale Materialauslastung der

- 48 -

Bauwerksteile und der inneren Anlagenkomponente erreicht, wodurch die Betriebsbedingungen erweitert
bzw. verbessert werden.

Danach wird bei gleichen Stützlasten eine wesentlich
geringere Dimensionierung der Bauwerksteile und Anlagenkomponenten erreicht. Der äußere Kreis des Bauwerks
wird vom inneren Kreis der Anlagensysteme und ihrer
Komponenten getrennt. Zur Absicherung von äußeren
Bauwerksbelastungen, etwa Erdbeben, auf die inneren
Anlagensysteme und ihre Komponenten müssen die dabei
auftretenden dynamischen Kräfte nicht ermittelt werden,
sondern lediglich muß die Bewegungsfreiheit ihrer Kinematik entsprechend zur Kompensierung bzw. Auslenkung
in den flächig gestützten Stabeinheiten gewährleistet
werden.

Ansprüche

1. Stützvorrichtung für Teile, wie Rohre, Behälter,
Wände, Decken, Bühnen, Träger, Maschinen, an Bauwerken oder Anlagen, insbesondere für die ein
statischer und/oder dynamischer Lastfallnachweis
erforderlich ist, mit Lastübertragungsteilen, insbesondere Stäben (struts), die mit ihren an beiden
Enden angeordneten Gelenken befestigt sind, d a -
d u r c h   g e k e n n z e i c h n e t ,  daß das
zu stützende Teil (3, 23, 23a, 23b) von einem feststehenden Rahmen (4) oder Rahmenteil (4a) umgeben
ist, an dem die Lastübertragungsteile (5, 21, 21a)
angelenkt sind, wobei das zu stützende Teil im
Rahmen oder Rahmenteil in mindestens einer Bewegungs- oder Drehrichtung (X, Y, Z, D) frei beweglich gelagert ist, und/oder daß zusätzlich zu den
am Bauwerk oder der Anlage und am zu stützenden
Teil befestigten Gelenkstellen mindestens eine weitere Gelenkstelle (50-54, 61) zwischen den Lastübertragungsteilen angeordnet ist, über die das zu
stützende Teil gehalten ist und an der nur Lastübertragungsteile angelenkt sind.

2. Stützvorrichtung nach Anspruch 1, d a d u r c h

34 205 EU
HC/Be

gekennzeichnet , daß die Lastübertragungsteile (5, 21, 21a) zueinander in einem
Winkel von 45 bis 135 Grad stehen.

3. Stützvorrichtung nach Anspruch 1 oder 2, d a -
   d u r c h   g e k e n n z e i c h n e t , daß
   die Lastübertragungsteile (5, 21, 21a) von Röhren
   gebildet werden.

4. Stützvorrichtung nach einem der Ansprüche 1 bis
   3, d a d u r c h   g e k e n n z e i c h n e t ,
   daß die Lastübertragungsteile für bestimmte Kraftübertragungsfälle zuvor konstruiert und statisch
   belegt sind.

5. Stützvorrichtung nach einem der Ansprüche 1 bis
   4, d a d u r c h   g e k e n n z e i c h n e t ,
   daß am Rahmen (4) Anschlußteile oder Gelenkhälften
   (11a) angeordnet sind, an denen die Gelenke oder
   Gelenkhälften (11b) der Lastübertragungsteile (5)
   befestigt sind.

6. Stützvorrichtung nach einem der Ansprüche 1 bis 5,
   d a d u r c h   g e k e n n z e i c h n e t , daß
   im Rahmenteil Paß- und/oder Lagerstücke (8, 9, 24,
   25, 38, 39, 46) eingebracht sind.

7. Stützvorrichtung nach Anspruch 5 oder 6, d a -
   d u r c h  · g e k e n n z e i c h n e t , daß mindestens zwei Lastübertragungsteile (5) an einer
   einzigen Anlenkstelle des Rahmens (4) oder eines
   Festpunktes um dieselbe Achse drehbar gelagert sind.

8. Stützvorrichtung nach einem der Ansprüche 1 bis 7, d a d u r c h   g e k e n n z e i c h n e t ·, daß der Rahmen zumindest mit einer Stelle (26) direkt an einem Festpunkt angelenkt ist.

9. Stützvorrichtung nach einem der Ansprüche 1 bis 8, d a d u r c h   g e k e n n z e i c h n e t , daß der Rahmen (21) zumindest mit einer Stelle (21b) an einem zweiten Rahmen unbeweglich befestigt oder angelenkt ist.

10. Stützvorrichtung nach einem der Ansprüche 1 bis 9, d a d u r c h   g e k e n n z e i c h n e t , daß der Rahmen neben der ersten Öffnung (27a), in der das zu stützende Teil, insbesondere ein Rohr (23a), gelagert ist, mindestens eine zweite Öffnung (27b) zur Lagerung mindestens eines zweiten zu stützenden Teils, insbesondere eines Rohrs (23b), aufweist.

11. Stützvorrichtung nach einem der Ansprüche 1 bis 10, d a d u r c h   g e k e n n z e i c h n e t , daß der Rahmen (21) an einer Außenseite eine Lagerstelle (37) für ein weiteres zu stützendes Teil, insbesondere ein Rohr (23c), aufweist.

12. Stützvorrichtung nach einem der Ansprüche 1 bis 11, d a d u r c h   g e k e n n z e i c h n e t , daß statt eines Lastübertragungsteils eine Feder angeordnet ist.

13. Stützvorrichtung nach einem der Ansprüche 1 bis

12, d a d u r c h   g e k e n n z e i c h -
n e t ,   daß zwischen Lastübertragungsteil und
Festpunkt oder zwischen Lastübertragungsteil
und Rahmen eine Feder angeordnet ist.

14. Stützvorrichtung nach einem der Ansprüche 1 bis
13, d a d u r c h   g e k e n n z e i c h -
n e t ,   daß mindestens eine Anlenkstelle (26)
des Rahmens (21) am übrigen Rahmen (22) federnd
befestigt ist.

15. Stützvorrichtung nach Anspruch 14, d a d u r c h
g e k e n n z e i c h n e t ,   daß die Feder (32)
in Richtung der an der Anlenkstelle angreifenden
Stützkraft (K) beweglich ist.

16. Stützvorrichtung nach Anspruch 14 oder 15, d a -
d u r c h   g e k e n n z e i c h n e t ,   daß
die Feder (32) eine Schraubenfeder ist, deren
Achse in Richtung der Stützkraft (K) angeordnet
ist.

17. Stützvorrichtung nach einem der Ansprüche 14 bis
16, d a d u r c h   g e k e n n z e i c h -
n e t ,   daß die Feder (32) von einem topfförmigen, insbesondere zylindrischen Teil (21) umgeben
ist, das einen Teil des Rahmens bildet, und in
oder am anderen Teil (22) des Rahmens gleitet.

18. Stützvorrichtung nach einem der Ansprüche 1 bis

- 53 -

17, dadurch gekennzeichnet,
daß die Längsachse des Lastübertragungsteils (5,
21, 21a) bzw. die Stützkraft durch die Stützfläche des Lagers des Festpunktes verläuft.

19. Stützvorrichtung nach einem der Ansprüche 1 bis
18, dadurch gekennzeichnet,
daß an der weiteren Gelenkstelle (50, 52, 53, 54,
61) drei Lastübertragungsteile (5, 55, 57, 60)
mit einem Ende beweglich befestigt sind.

20. Stützvorrichtung nach Anspruch 19, dadurch
gekennzeichnet, daß von diesen
drei Lastübertragungsteilen (5) zwei Lastübertragungsteile mit den anderen Enden am Bauwerk (6b)
oder der Anlage direkt oder über Zwischenteile
angelenkt sind, und das dritte Lastübertragungsteil (5) mit dem anderen Ende direkt oder über
Zwischenteile (5, 55, 60) an dem zu stützenden
Teil (3a) angelenkt ist.

21. Stützvorrichtung nach Anspruch 19, dadurch
gekennzeichnet, daß von diesen
drei Lastübertragungsteilen (5) zwei Lastübertragungsteile mit den anderen Enden am zu stützenden
Teil (3a) direkt oder über Zwischenteile angelenkt
sind und das dritte Lastübertragungsteil mit dem
anderen Ende direkt oder über Zwischenteile am
Bauwerk (6b) oder der Anlage direkt oder über Zwischenteile angelenkt ist.

22. Stützvorrichtung nach einem der Ansprüche 1 bis

- 54 -

21, d a d u r c h   g e k e n n z e i c h -
n e t , daß alle Lastübertragungsteile (5, 55,
57, 60) in einer Ebene angeordnet sind oder zu
dieser parallel liegen.

23. Stützvorrichtung nach Anspruch 22, d a d u r c h
g e k e n n z e i c h n e t , daß ein Lastübertragungsteil (5, 55) in zwei oder mehr Lastübertragungsteile aufgeteilt ist, die zueinander
parallel liegen.

24. Stützvorrichtung nach Anspruch 22 oder 23, d a -
d u r c h   g e k e n n z e i c h n e t , daß
die Hauptbewegungsrichtung des zu stützenden Teils
(3a) in der Ebene oder parallel zu dieser liegt.

25. Stützvorrichtung nach einem der Ansprüche 22 bis
24, d a d u r c h   g e k e n n z e i c h n e t ,
daß die Längsachse des zu stützenden Teils (3a),
insbesondere eines Rohres, in der Ebene oder parallel zu dieser liegt.

26. Stützvorrichtung nach einem der Ansprüche 1 bis
25, d a d u r c h   g e k e n n z e i c h n e t ,
daß die Längsachsen zweier an einer weiteren Gelenkstelle angreifenden Lastübertragungsteile
(5, 55) miteinander nicht fluchten, sondern miteinander einen Winkel kleiner oder größer 180 Grad
bilden.

27. Stützvorrichtung nach einem der Ansprüche 1 bis 26, dadurch gekennzeichnet,
daß alle Gelenke (11, 50, 52, 54, 61) der Lastübertragungsteile (5, 55) in einer Ebene liegen.

28. Stützvorrichtung nach einem der Ansprüche 1 bis
27, dadurch gekennzeichnet,
daß die Drehachsen aller Gelenke (11, 50, 52, 54,
61) zueinander parallel und zur Ebene lotrecht
sind.

29. Stützvorrichtung nach einem der Ansprüche 1 bis
28, dadurch gekennzeichnet,
daß die Lastübertragungsteile (5, 55) drei - oder
mehr - Gelenkketten bilden, wobei insbesondere
deren Glieder nur - durch starre Anlenkstellen
bewegt - ein Öffnen oder Schließen der Kette
bewirken.

30. Stützvorrichtung nach einem der Ansprüche 1 bis
29, dadurch gekennzeichnet,
daß zwischen den Lastübertragungsteilen (5, 55)
ein flächenförmiges starres Übertragungsteil (57,
60), insbesondere aus drei Stäben (57), angeordnet
ist, an dem drei oder mehr Lastübertragungsteile
angelenkt sind.

31. Stützvorrichtung nach einem der Ansprüche 1 bis
30, dadurch gekennzeichnet,
daß am zu stützenden Teil zwei Lastübertragungsteile (55) mit ihren ersten Enden angelenkt sind,
deren gegenüberliegende Enden durch eine weitere Gelenkstelle aneinander und an einem weiteren Lastübertragungsteil (5) angelenkt sind, das eine Verbindung mit dem Bauwerk oder der Anlage schafft, wobei durch Wahl der Lage der weiteren Gelenkstelle gegenüber den Anlenkstellen der Lastübertragungsteile an dem zu stützenden Teil die Bewegungsrichtung des Teils aufgrund seiner Wärmedehnung bestimmbar ist.

32. Stützvorrichtung nach einem der Ansprüche 1 bis 31, d a d u r c h   g e k e n n z e i c h n e t , daß das gestützte Teil (3, 3a, 4, 4a, 4b, 6, 6a bis 6e) bei Bewegung eines am Bauwerk oder der Anlage angeordneten Abstützpunktes (11) durch die Stützvorrichtung axial oder parallel zu seiner vorherigen Lage bewegbar ist.

33. Stützvorrichtung nach einem der Ansprüche 1 bis 32, d a d u r c h   g e k e n n z e i c h n e t , daß an einer ersten Anlenkstelle (11) des zu stützenden Teils (3a) oder Rahmens (4) zwei Lastübertragungsteile (5) angreifen, die in einer ersten Ebene liegen, daß an einer zweiten Anlenkstelle (11) des zu stützenden Teils (3a) oder Rahmens (4) zwei Lastübertragungsteile (5) angreifen, die in einer zweiten Ebene liegen, die zur ersten Ebene nicht parallel ist, und daß an einer dritten Anlenkstelle (11) zumindest ein Lastübertragungsteil (5) angreift.

34. Stützvorrichtung nach einem der Ansprüche 1 bis 33, dadurch gekennzeichnet, daß von der weiteren Gelenkstelle (50) ein Lastübertragungsteil (5) zu einer vierten bzw. fünften Gelenkstelle (52) führt, von der zwei weitere Lastübertragungsteile (55) ausgehen, die mit ihren anderen Enden direkt oder über Zwischenteile an dem zu stützenden Teil (3a) oder an einem das zu stützende Teil umgebenden Rahmen (4) angelenkt sind.

0032392

−1/22

Fig. 1

Fig. − 2

Fig. 3

0032392

−2/22

Fig. 4

Fig. 5

Fig. 6

-3/22

**Fig. 7**

**Fig. 8**

Fig. 8a

Fig. 8b

−5/22

Fig. 9

Fig. 10

40 41 26a 26b 21 28 39 38 21b 22 27b 26b 25 23b24 26c 21a

**Fig.11**

42,43,44          29 23a 27a 28  46          42,43,44

29 21 28 39 23a          21b 28 22 26b 23b

**Fig.12**

40 41 26a 42,43,44 26b 23a          26c 21a

45 21a 44 42 43 27a 28          27          28 42 43 45          45 21a 44

21a 42

40 41 26d 42,43,44 21 39 23  **Fig.13**  21 39 23          **Fig.14**

Fig. 15

Fig. 16

Fig. 17

Fig. 18

Fig. 19

Fig. 20

Fig. 21

−8/22

**Fig. 22**

**Fig. 23**

**Fig. 24**

**Fig. 25**

Fig. 26

Fig. 27

Fig. 28

0032392

Fig. 29

Fig. 30

Fig. 31

Fig. 32

Fig. 33

Fig. 34

Fig. 35

−16/22

## Fig. 36

"B"

11

50

5

X,Y o. Z

55

54

57

55

11

## Fig. 38

11

5

57

54

55

5

50

57

11

## Fig. 37

## Fig. 39

Fig. 40

Fig. 41

Fig. 42

Fig. 43

Fig. 44

Fig. 45

- 20722

Fig. 46

Fig. 47

Fig. 48

Fig. 49

Fig. 50

Fig. 51

Fig. 52

0032392

Fig. 53

Fig. 54

Fig. 55